# EUROPÄISCHE PATENTSCHRIFT

(11) **EP 1 875 188 B1**
(45) Veröffentlichungstag und Bekanntmachung des Hinweises auf die Patenterteilung: **04.05.2011**
(21) Anmeldenummer: 06723597.8
(22) Anmeldetag: 21.03.2006
(51) Int. Cl.: G01L 25/00

(54) **INTEGRIERTE MESSSTEUERUNG FÜR MASCHINENFÄHIGKEITSUNTERSUCHUNG VON SCHRAUBERN**
INTEGRATED MEASUREMENT CONTROL FOR MACHINE POWER TESTING OF SCREWING DEVICES
SYSTEME D'ETALONNAGE AUTOMATIQUE INTEGRE POUR CONTROLER LE BON FONCTIONNEMENT DE VISSEUSES

(30) Priorität: 24.03.2005 DE 102005013784
(43) Veröffentlichungstag der Anmeldung: 09.01.2008
(73) Patentinhaber: Alfing Montagetechnik GmbH, 73433 Aalen (DE)
(72) Erfinder: GASS, Baltes c/o Alfing Montagetechnik GmbH, 73433 Aalen (DE)
(74) Vertreter: HOFFMANN EITLE
(86) Internationale Anmeldenummer: PCT/EP2006/002596
(87) Internationale Veröffentlichungsnummer: WO 2006/100040

(56) Entgegenhaltungen:
- DE-A1- 19 637 540
- DE-U1- 20 314 920
- US-A- 4 517 821
- US-A- 4 976 133

## Beschreibung

### GEBIET DER ERFINDUNG

Die Erfindung betrifft ein System zur Prüfung von Schraubern und insbesondere ein System zur automatischen Prüfung von Schraubern.

Systeme zur Prüfung von Schraubern werden beispielsweise in der Montagetechnik, insbesondere bei der Automobilfertigung eingesetzt. Derartige Systeme finden sich jedoch auch in anderen Anwendungsgebieten, bei denen Schrauber zum Einsatz kommen, z. B. bei der Serienfertigung in der Elektronikindustrie, und zwar sowohl in der vollautomatisierten wie auch in der halb-automatisierten Serienfertigung.

Herkömmlicherweise werden Schraubwerkzeuge mit Drehmomentaufnehmer nach der Montage, der Inbetriebnahme und während ihres Einsatzes bezüglich ihrer Fähigkeit überprüft. Bei diesem Vorgang, der allgemein als Maschinenfähigkeitsuntersuchung bezeichnet wird, wird überprüft, ob ein Drehmoment, das ein Schrauber auf eine Schraubstelle ausübt, mit einem Drehmoment übereinstimmt, welches ein Drehmomentsensor des Schraubers misst. Insbesondere während des Einsatzes, das heißt während der Produktion, werden Schrauber in bestimmten Prüfzyklen immer wieder auf ihre Fähigkeit überprüft. Art und Häufigkeit der Fähigkeitsprüfungen hängen dabei beispielsweise von fertigungs- und verfahrenstechnischen Vorgaben ab. So hängt z. B. der zeitliche Abstand zwischen zwei Fähigkeitsprüfungen eines Schraubers in der Automobilfertigung von der Sicherheitsrelevanz der Schraubfälle ab, die ein Schrauber ausführt. Bei sogenannten Schraubfällen der Klasse A (z. B. an Fahrwerk, Bremsen, Lenkung, Sicherheitsgurt und Airbag), deren exakte Durchführung von besonderer Bedeutung für die Betriebssicherheit des fertiggestellten Automobils sind, wird der Fähigkeitsprüfungszyklus in der Regel kürzer sein als bei sogenannten funktionskritischen Schraubfällen der Klasse B (wie z. B. an Motor, Getriebe oder Massepunktschrauben), deren Sicherheitsrelevant niedriger einzustufen ist.

### STAND DER TECHNIK

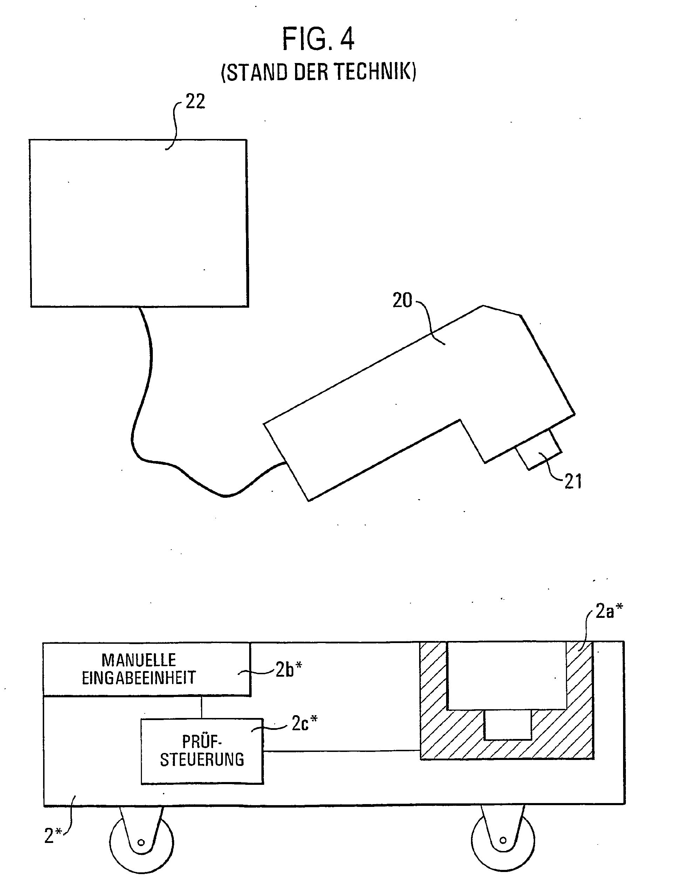

Zur Durchführung einer Fähigkeitsprüfung von Schraubwerkzeugen werden derzeit verschiedene Systeme verwendet. So wird z. B. zum Überprüfen des von dem Schraubwerkzeug ausgegebenen Drehmoments ein Drehmomentaufnehmer mit Gegenmesssystem auf das Schraubwerkzeug aufgesteckt. Bei handgeführten Schraubwerkzeugen kommen sogenannte Knickschlüssel zum Einsatz, mit denen der Bediener selbst das Drehmoment einer mit dem zu überprüfenden Schrauber angezogenen Schraube überprüft. Ferner kommt in der Montagetechnik häufig eine fahrbare Messbank zum Einsatz, mit der mehrere Schrauber hintereinander auf ihre Fähigkeit überprüft werden können. Eine solche fahrbare Messbank 2* ist in Figur 4 schematisch dargestellt. Die Messbank 2* umfasst eine Prüfeinheit 2a*, eine manuelle Eingabeeinheit 2b* und eine Prüfsteuerung 2c*. Die fahrbare Messbank 2* bildet zusammen mit einem Schrauber 20, der eine Dreheinheit 21 umfasst, und einer Steuereinheit 22 zum Steuern einer Drehung der Dreheinheit 21 ein System zur Prüfung von Schraubern, wie es aus dem Stand der Technik bekannt ist. Bei dem in Figur 4 gezeigten Schrauber 20 handelt es sich um ein handgeführtes elektrisch steuerbares Bearbeitungswerkzeug, dass über ein Kabel mit seiner Steuereinheit 22 verbunden ist. Die Steuereinheit 22 kann dabei z. B. über eine Verbindungsstange mit einer Halteeinheit verbunden sein, die in einer Verschiebehalteeinrichtung aufgenommen ist (nicht in Figur 4 gezeigt), wobei die Halteeinheit verschiebbar in der Verschiebehalteeinrichtung bewegbar ist. Bei der Halteeinheit handelt es sich üblicherweise um einen Laufkasten oder eine Laufkatze, die mit einigen Rollen versehen ist, die in eine Laufschiene eingehängt sind, die als Verschiebehalteeinrichtung verwendet wird. Über die Verschiebehalteeinrichtung können sowohl die Steuereinheit 22 als auch der Schrauber 20 mit Energie versorgt werden. Darüber hinaus kann die Verschiebehalteeinrichtung auch als Steuerleitung und Datenleitung dienen, um die Steuereinheit 22 von einer zentralen Überwachungseinheit (im folgenden auch als 'zentrale Einheit' bezeichnet) mit Steuerdaten zu versorgen. Wenn z. B. mehrere solcher Steuereinheiten 22 nacheinander in einer solchen Verschiebehalteeinrichtung angeordnet sind, kann jeder einzelnen Steuereinheit 22 von der zentralen Einheit über die Verschiebehalteeinrichtung ein Steuerdatensatz übermittelt werden, der den Bearbeitungsdaten des entsprechenden Schraubers 20 an einer bestimmten Schraubstelle entspricht. Bei diesen Daten handelt es sich beispielsweise um einen Drehmomentwert, den der Schrauber 20 über die Dreheinheit 21 an die Schraubstelle abgeben soll.

Bisher war es üblich, dass eine Prüfperson die fahrbare Messbank 2* nacheinander zu jeder der Schraubstationen (bestehend aus Steuereinheit 22 und Schrauber 20) rollt, um eine Maschinenfähigkeitsuntersuchung der Schrauber 20 vorzunehmen. Dabei muss die Prüfperson zunächst über die Steuereinheit 22 die aktuellen Steuerdaten für den betreffenden Schrauber 20 auslesen, z. B. einen Drehmomentwert, mit welchem der Schrauber 20 eine Schraubstelle anziehen soll. Diesen ausgelesenen Drehmomentwert muss die Prüfperson als sogenannte Sollwertvorgabe per Hand über die manuelle Eingabeeinheit 2b* in die fahrbare Messbank 2* eingeben. Wahlweise ist es auch möglich, dass die Prüfperson direkt eine bestimmte Sollwertvorgabe für ein Drehmoment des Schraubers 20 in die Steuereinheit 22 eingibt, und dieselbe Sollwertvorgabe auch in die manuelle Eingabeeinheit 2b* der fahrbaren Messbank 2* eingibt.

Danach koppelt die Prüfperson den Schrauber 20 mit der Prüfeinheit 2a* der fahrbaren Messbank 2*, so dass die Dreheinheit 21 des Schraubers 20 in die Prüfeinheit 2a* eingreift. Die Prüfeinheit 2a* umfasst eine Gegendrehmoment- Erzeugungseinrichtung, die ein Gegendrehmoment zu dem von der Dreheinheit 21 erzeugten Drehmoment erzeugt.

Danach veranlasst die Prüfperson die Steuereinheit (22), die Dreheinheit 21 des Schraubers 20 soweit zu drehen, bis ein erster Drehmomentsensor des Schraubers 20 das vorgegebene Soll-Drehmoment misst. Das von der Dreheinheit 21 ausgegebene Ist-Drehmoment wird dabei von der Prüfeinheit 2a* der fahrbaren Messbank gemessen. Sowohl das von der Prüfeinheit 2a* gemessene Ist-Drehmoment als auch die über die manuelle Eingabeeinheit 2b* eingegebene Sollwertvorgabe des Drehmoments werden an die Prüfsteuerung 2c* weitergegeben. In der Prüfsteuerung 2c* findet dann ein Vergleich des Soll-Drehmoments und des Ist-Drehmoments statt. Im Falle einer Übereinstimmung der beiden Werte wird der Schrauber als fähig beurteilt, im Falle einer Abweichung wird der Schrauber als nicht fähig beurteilt.

Dieses herkömmliche Prüfsystem für Schrauber mit einer fahrbaren Messbank 2* hat den Nachteil, dass es einen erhöhten Personalaufwand und hohe Gerätekosten verursacht. So ist z. B. ein hoher Personalaufwand notwendig, um die Fähigkeitsüberprüfung der eingesetzten Schrauber auf einem hohen Niveau zu halten, da dies nur möglich ist, wenn die Prüfzyklen möglichst kurz gehalten werden. Verlängert man die Prüfzyklen z. B. auf einmal pro Woche, birgt dies das Risiko, dass ein Schrauber, der nach der letzten Fähigkeitsüberprüfung als IO (in Ordnung, d.h. fähig) beurteilt wurde, dann aber während des weiteren Einsatzes fehlerhaft wurde, d. h. NIO (nicht in Ordnung, d.h. nicht fähig), bis zur nächsten Fähigkeitsprüfung eine große Zahl von Ausschussstücken produziert, was zu aufwendiger Nacharbeit oder im Falle eines verspäteten Bemerkens bis zu einer Rückholaktion der gefertigten Stücke führen kann. Um letzteres zu vermeiden, wurde bisher der erhöhte Aufwand, der mit kurzen Prüfzyklen verbunden ist, in Kauf genommen, um möglichst genaue Aussagen über die Fähigkeit der Schraubwerkzeuge zu erhalten. Ferner stellt die oben beschriebene fahrbare Messbank 2* ein kostenintensives Gerät dar.

Dokument US 4,517,821 A betrifft eine automatisch betriebene Drehmomentschlüssel-Testmaschine, die einen Dehnmessstreifen-Umwandler verwendet, um Signale gemäß dem auf den Drehmomentschlüssel angewandte Drehmoment zu erzeugen. Die Maschine wird pneumatisch bzw. hydraulisch unter der Steuerung eines Mikroprozessors betrieben. Das Drehmoment wird zunächst bei einer relativ hohen Rate angewandt. Eenn jedoch der Wert des erfassten Drehmoments sich einem Sollwert nähert, wird das angewandte Drehmoment automatisch auf eine relativ niedrige Rate begrenzt. Wenn der Soll- oder Klickwert erreicht ist, fällt das vom Umwandler erzeugte Signal deutlich von dessen höchsten Wert ab. Danach wird eine vorbestimmte Anzahl von zusätzlichen Drehmomentwerten erfasst und mit dem höchsten Wert verglichen. Wenn keine der folgenden Werte den höchsten Wert übersteigt, wird der höchste Wert angezeigt und die Richtung, in der das Drehmoment auf den Drehmomentschlüssel angewandt wird, wird umgekehrt, bis eine neutrale Position erreicht ist. Der Drehmomentantrieb wird daraufhin abgebrochen, und der Drehmomentschlüssel wird dann in der entgegengesetzten Richtung getestet.

Das herkömmliche System zur Fähigkeitsprüfung von Schraubwerkzeugen hat den Nachteil, dass es mit hohem Aufwand und Kosten verbunden ist.

### ERLÄUTERUNG DER ERFINDUNG

Es ist daher Aufgabe der vorliegenden Erfindung, ein System zur Prüfung von Schraubern bereitzustellen, welches eine effektive und kostengünstige Prüfung von Schraubern ermöglicht.

Diese Aufgabe wird gelöst durch ein System (Anspruch 1) zur automatischen Prüfung von Schraubern, umfassend: mindestens einen Schrauber mit einer Dreheinheit; eine Steuereinheit zum Steuern einer Drehung der Dreheinheit; eine Prüfeinheit zum Prüfen des Schraubers über die Dreheinheit; und eine Datenaustauscheinheit zum zumindest unidirektionalen Austausch von Daten von der Prüfeinheit zur Steuereinheit, wobei die Prüfeinheit geeignet ist, zumindest mit der Dreheinheit zumindest eines Schraubers in einer Anfangsdrehposition der Dreheinheit in Kontakt gebracht zu werden, und die Steuereinheit ausgelegt ist, die Dreheinheit über die Anfangsdrehposition hinaus um einen vorgegebenen Winkelbetrag in eine andere Anfangsdrehposition zurückzudrehen.

Durch das Bereitstellen der vorgenannten Datenaustauscheinheit wird es z. B. ermöglicht, dass z. B. in der Prüfeinheit ermittelte Daten direkt an die Steuereinheit eines Schraubers übermittelt werden können. Dadurch können Auswertungen der von der Prüfeinheit ermittelten Prüfdaten von der Steuereinheit des Schraubers oder von einer zentralen Einheit durchgeführt werden. Dadurch kann z. B. erreicht werden, dass keine Prüfsteuerung zusätzlich zur Steuereinheit zum Steuern des Schraubers zur Prüfung benötigt wird. Ferner kann erreicht werden, dass keine manuelle Eingabe einer Sollwertvorgabe nötig ist, da die zu prüfenden Sollwerte bereits in der Steuereinheit vorliegen können. Somit wird eine effektive und kostengünstige Prüfung von Schraubern ermöglicht.

Es ist möglich, dass die Datenaustauscheinheit lediglich zum Austausch von Daten von der Prüfeinheit zur Steuereinheit ausgelegt ist. In diesem Fall wird die Prüfeinheit in der Regel ein passives Element bei der Prüfung des Schraubers darstellen. Es ist aber auch möglich, dass die Datenaustauscheinheit sowohl für einen Austausch von Daten von der Prüfeinheit zur Steuereinheit, als auch für einen Austausch von Daten von der Steuereinheit zur Prüfeinheit ausgelegt ist. In diesem Fall kann die Prüfeinheit auch ein aktives Element bei der Prüfung von Schraubern darstellen.

Vorzugsweise umfassen die zum zumindest unidirektionalen Austausch von der Prüfeinheit zur Steuereinheit vorgesehenen Daten Drehmomentwerte des Schraubers (Anspruch 2). Die Daten können aber auch andere Werte wie z. B. Drehwinkelwerte oder andere für die Schrauberfunktion maßgebliche Werte enthalten.

Ferner ist es vorteilhaft, dass die Prüfeinheit ausgelegt ist, ein von der Dreheinheit des Schraubers ausgegebenes Drehmoment zu überprüfen (Anspruch 3). Dabei ist vorzugsweise die Prüfeinheit ausgelegt, ein Ergebnis der Überprüfung des von der Dreheinheit des Schraubers ausgegebenen Drehmoments als Wert eines Ist-Drehmoments des Schraubers über die Datenaustauscheinheit zur Steuereinheit auszutauschen (Anspruch 4).

Dadurch wird ermöglicht, dass die Steuereinheit das von der Prüfeinheit übermittelte Ist-Drehmoment mit einem Soll-Drehmoment der Steuereinheit vergleichen kann.

Ferner kann der Schrauber einen ersten Drehmomentsensor umfassen (Anspruch 5). Ausserdem kann die Prüfeinheit eine Gegendrehmoment-Erzeugungseinrichtung und einen zweiten Drehmomentsensor umfassen (Anspruch 6).

Ferner ist es vorteilhaft, dass die Prüfeinheit geeignet ist, zumindest mit der Dreheinheit zumindest eines Schraubers in einer Anfangsdrehposition der Dreheinheit in Kontakt gebracht zu werden.

Vorzugsweise ist die Steuereinheit geeignet, eine Drehung der mit der Prüfeinheit in Kontakt gebrachten Dreheinheit zu steuern, bis der erste Drehmomentsensor ein vorgegebenes Soll-Drehmoment erreicht (Anspruch 7).

Ferner ist es vorteilhaft, dass der zweite Drehmomentsensor geeignet ist, das durch das Drehen der Dreheinheit verursachte Ist-Drehmoment zu messen (Anspruch 8).

Vorzugsweise umfasst das System ferner eine Vergleichseinheit zum Vergleichen des vorgegebenen Soll-Drehmoments des Schraubers mit dem vom zweiten Drehmomentsensor gemessenen Ist-Drehmoment (Anspruch 9).

Vorzugsweise ist die Steuereinheit ausgelegt, die Dreheinheit über die Anfangsdrehposition hinaus um einen vorgegebenen Winkelbetrag in eine andere Anfangsdrehposition zurückzudrehen. Durch das Zurückdrehen der Dreheinheit über die Anfangsdrehposition hinaus um einen vorgegebenen Winkelbetrag in eine andere Anfangsdrehposition kann erreicht werden, dass sich die im Schrauber befindlichen funktionalen Bauteile des Abtriebs zueinander zuverlässig in einer anderen Position befinden als der Position der im Schrauber befindlichen funktionalen Bauteile des Abtriebs zueinander beim Kontaktieren der Dreheinheit des Schraubers in der ersten Anfangsdrehposition der Dreheinheit mit der Prüfeinheit. Dadurch kann verhindert werden, dass der Schrauber in einer folgenden Überprüfung zufällig noch einmal in derselben Anfangsdrehposition der Dreheinheit, bzw. in derselben der im Schrauber befindlichen funktionalen Bauteile des Abtriebs zueinander, wie z.B. der Zahnräder des Abtriebs, überprüft wird.

Die im Schrauber befindlichen funktionalen Bauteile werden also in eine definiert andere Position zueinander gebracht als der Position, in der sie bei der Überprüfung des ersten Betriebspunktes des Schraubers zueinander standen. Somit wird eine effektive und zuverlässige Prüfung des Schraubers ermöglicht.

Vorzugsweise ist die Steuereinheit ausgelegt, für den Fall, dass das Soll-Drehmoment und das Ist-Drehmoment höchstens um einen vorgegebenen Betrag voneinander abweichen, die Dreheinheit über die Anfangsdrehposition hinaus um den vorgegebenen Winkelbetrag in die andere Anfangsdrehposition zurückzudrehen (Anspruch 10).

Ferner ist es vorteilhaft, dass die Steuereinheit ausgelegt ist, die Steuerung einer Drehung der mit der Prüfeinheit in Kontakt gebrachten Dreheinheit, bis der erste Drehmomentssensor ein vorgegebenes Soll-Drehmoment erreicht, und das nachfolgende Zurückdrehen der Dreheinheit über die Anfangsdrehposition hinaus um den vorgegebenen Winkelbetrag in eine andere Anfangsdrehposition wiederholt durchzuführen (Anspruch 11).

Vorzugsweise umfasst die Prüfeinheit einen Freilauf, der gewährleistet, dass der Kontakt zwischen der Dreheinheit und der Prüfeinheit während des Zurückdrehens der Dreheinheit kraftlos wird (Anspruch 12).

Dabei ist es vorteilhaft, dass der Freilauf bewirkt, dass während des Zurückdrehens der Dreheinheit die Gegendrehmoment-Erzeugungseinrichtung entspannt wird und der zweite Drehmomentsensor zurückgesetzt wird (Anspruch 13).

Vorzugsweise beinhaltet die Gegendrehmoment-Erzeugungseinrichtung ein Paar von Tellerfedern (Anspruch 14). Dadurch wird ein weiches Einfedern der Gegendrehmoment-Erzeugungseinrichtung ermöglicht, was zu einer Verlängerung der Lebensdauer der Prüfeinheit beiträgt.

Vorzugsweise ist der zweite Drehmomentsensor geeicht (Anspruch 15). Dabei ist es möglich, dass der zweite Drehmomentsensor eine geeichte Drehkette beinhaltet (Anspruch 16). Es ist aber auch möglich, dass der zweite Drehmomentsensor einen geeichten Dehnmessstreifen beinhaltet (Anspruch 17). Durch die Verwendung eines geeichten Drehmomentsensors in der Prüfeinheit wird ein genaues und verlässliches Prüfergebnis gewährleistet. Ferner umfasst die Datenaustauscheinheit eine elektrische Leitung, die die Prüfeinheit und die Steuereinheit miteinander verbindet (Anspruch 18).

Es ist aber auch möglich, dass die Datenaustauscheinheit eine drahtlose Kommunikationsverbindung zwischen der Prüfeinheit und der Steuereinheit umfasst (Anspruch 19). Dabei kann die drahtlose Kommunikationsverbindung eine Infrarot-Schnittstelle sein (Anspruch 20). Eine andere Möglichkeit besteht darin, dass die drahtlose Kommunikationsverbindung eine Funkschnittstelle ist (Anspruch 21).

Ferner ist es vorteilhaft, dass das System eine Aufnahmeeinheit zur Aufnahme des Schraubers umfasst (Anspruch 22). Dabei ist es vorteilhaft, dass die Aufnahmeeinheit ausgelegt ist, den Schrauber so aufzunehmen, dass die Dreheinheit des Schraubers in der Anfangsdrehposition mit der Gegendrehmoment-Erzeugungseinrichtung in Kontakt ist (Anspruch 23).

Ferner ist es möglich, dass die Aufnahmeeinheit als Ablageschale für den Schrauber ausgebildet ist und die Prüfeinheit in die Ablageschale integriert ist (Anspruch 24). Dabei ist es möglich, dass die Ablageschale fest mit der Steuereinheit verbunden ist (Anspruch 25). Es ist auch möglich, dass die Ablageschale einen Spannbügel zum Fixieren des Schraubers in der Ablageschale aufweist (Anspruch 26). Dies ermöglicht es, dass ein Benutzer des Schraubers 20 in einer Produktionspause den Schrauber über den Spannbügel in der Ablageschale fixiert und gleichzeitig den Prüfablauf für eine Maschinenfähigkeitsuntersuchung startet. Der Prüfvorgang kann während der Pause vollautomatisch ablaufen. Dies hat den Vorteil, dass der Personalaufwand zur Durchführung einer Überprüfung eines Schraubers gering ist und die Prüfung von Schraubern somit kostengünstig durchgeführt werden kann.

Vorzugsweise ist die Prüfeinheit in die Steuereinheit integriert (Anspruch 27). Es wird jedoch betont, dass die vorliegende Erfindung nicht darauf beschränkt ist, dass die Prüfeinheit in die Steuereinheit integriert ist.

Bei den zuvor beschriebenen Ausführungsformen des Systems zur automatischen Prüfung von Schraubern handelt es sich vorzugsweise um handgeführte Schrauber (Anspruch 28). Die vorliegende Erfindung ist jedoch nicht auf die Verwendung von handgeführten Schraubern beschränkt, sondern umfasst auch Prüfsysteme zum Prüfen anderer Schrauber, z. B. vollautomatischer Schrauber oder halb-automatischer Schrauber, die auch vollständig fixiert oder verschiebbar gelagert sein können.

Weitere vorteilhafte Ausführungsformen und Verbesserungen der Erfindung sind in den abhängige Ansprüchen angegeben.

Nachstehend wird die Erfindung anhand ihrer vorteilhaften Ausführungsformen unter Bezugnahme auf die Zeichnungen näher erläutert.

### KURZBESCHREIBUNG DER ZEICHNUNGEN

In den Zeichnungen bezeichnen die gleichen oder ähnlichen Bezugszeichen gleiche oder ähnliche Teile. In den Zeichnungen zeigen:
- Figur 1: ein Blockschaltbild des erfindungsgemäßen Prüfsystems;
- Figur 2: ein Überblickdiagramm des erfindungsgemäßen Prüfsystems gemäß einer ersten Ausführungsform;
- Figur 3: ein Überblickdiagramm einer zweiten Ausführungsform des erfindungsgemäßen Prüfsystems;
- Figur 4: ein herkömmliches System zur Prüfung von Schraubern mit einer fahrbaren Messbank gemäß dem Stand der Technik.
- Figur 5: ein Blockschaltbild des erfindungsgemäßen Prüfsystems gemäß einer dritten Ausführungsform;
- Figur 6: ein Überblicksdiagramm des erfindungsgemäßen Prüfsystems gemäß der dritten Ausführungsform;
- Figur 7: ein Überblicksdiagramm des erfindungsgemäßen Prüfsystems gemäß einer vierten Ausführungsform;
- Figur 8: eine Querschnittsansicht einer Prüfeinheit und eines mit der Prüfeinheit in Kontakt gebrachten Schraubers mit Dreheinheit gemäß der dritten oder vierten Ausführungsform;
- Figur 9: eine Schnittzeichnung entlang der Linie VIII-VIII in Figur 8, welche in Draufsicht die Gegendrehmoment-Erzeugungseinrichtung mit dem Freilauf der in Fig. 8 gezeigten Ausführungsform zeigt;
- Figur 10: ein Flussdiagramm eines Prüfverfahrens gemäß einer ersten Ausführungsform der vorliegenden Erfindung; und
- Figur 11: ein Flussdiagramm eines Prüfverfahrens gemäß einer zweiten Ausführungsform der vorliegenden Erfindung.

### AUSFÜHRLICHE BESCHREIBUNG VON BEVORZUGTE AUSFÜHRUNGSFORMEN DER ERFINDUNG

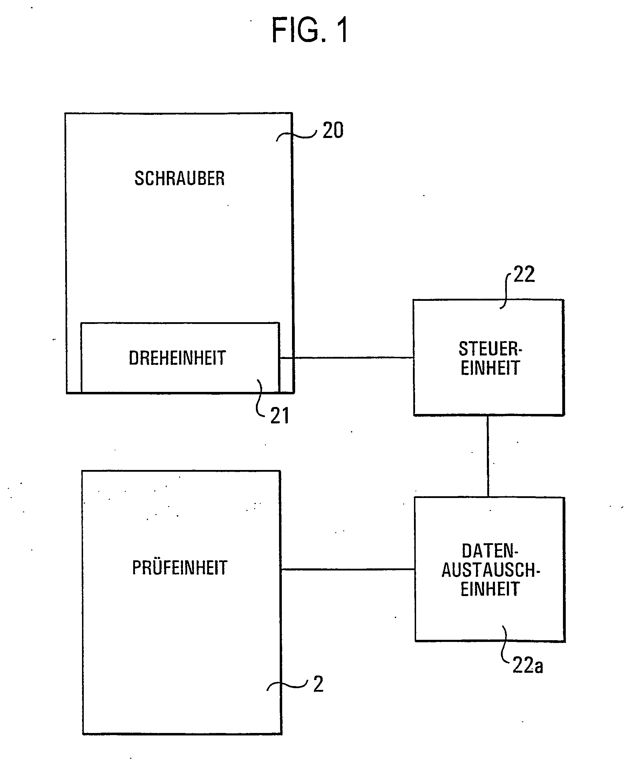

Figur 1 zeigt ein Blockdiagramm des erfindungsgemäßen Prüfsystems. Das Prüfsystem umfasst einen zu prüfenden Schrauber 20 mit einer Dreheinheit 21. Das Prüfsystem umfasst ferner eine Steuereinheit 22 zum Steuern einer Drehung der Dreheinheit 21. Außerdem umfasst das Prüfsystem eine Prüfeinheit 2 zum Prüfen des Schraubers 20 über die Dreheinheit 21. Ferner umfasst das Prüfsystem eine Datenaustauscheinheit 22a, welche geeignet ist, zumindest in einer Richtung (unidirektional) Daten von der Prüfeinheit 2 zur Steuereinheit 22 auszutauschen.

Durch das Bereitstellen der vorgenannten Datenaustauscheinheit wird es z. B. ermöglicht, dass z. B. in der Prüfeinheit ermittelte Daten direkt an die Steuereinheit eines Schraubers übermittelt werden können.

Dadurch können Auswertungen der von der Prüfeinheit ermittelten Prüfdaten von der Steuereinheit des Schraubers oder von einer zentralen Einheit durchgeführt werden. Dadurch kann z. B. erreicht werden, dass keine Prüfsteuerung zusätzlich zur Steuereinheit zum Steuern des Schraubers zur Prüfung benötigt wird. Ferner kann erreicht werden, dass keine manuelle Eingabe einer Sollwertvorgabe nötig ist, da die zu prüfenden Sollwerte bereits in der Steuereinheit vorliegen können. Somit wird eine effektive und kostengünstige Prüfung von Schraubern ermöglicht.

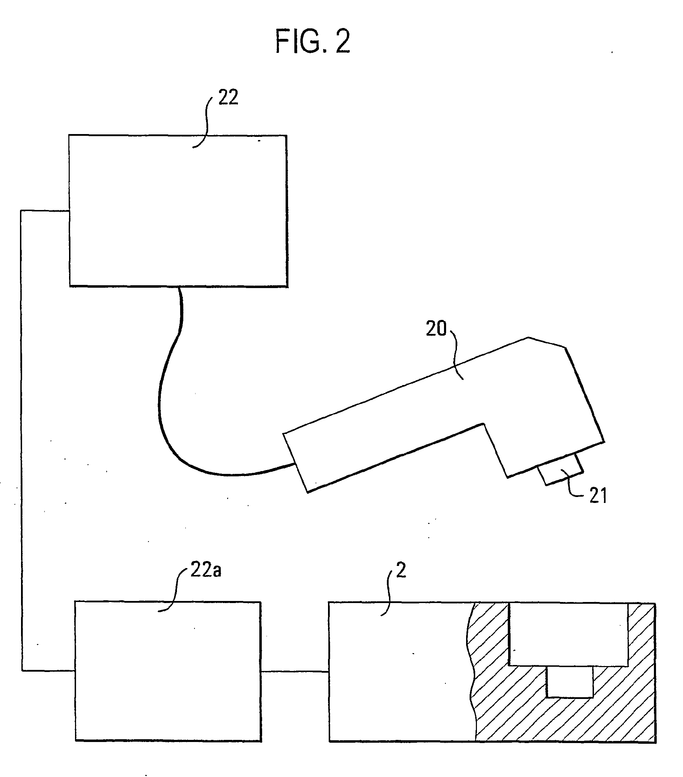

Figur 2 zeigt ein funktionales Schema einer ersten Ausführungsform des Prüfsystems der vorliegenden Erfindung. Die Bezugszeichen entsprechen gänzlich jenen in Figur 1, so dass zur Beschreibung der einzelnen Komponenten, die in Figur 2 mit diesen Bezugszeichen referenziert werden, auf die Beschreibung zu Figur 1 verwiesen werden kann.

Der zu prüfende Schrauber 20 umfasst einen ersten Drehmomentsensor (nicht gezeigt). Die Prüfeinheit 2 umfasst eine Gegendrehmoment-Erzeugungseinrichtung und einen zweiten Drehmomentsensor (nicht gezeigt). Die Prüfeinheit 2 ist geeignet, zumindest mit der Dreheinheit 21 des Schraubers 20 in einer Anfangsdrehposition der Dreheinheit 21 in Kontakt gebracht zu werden. Ferner umfasst das Prüfsystem eine Steuereinheit 22 zum Steuern einer Drehung der mit der Prüfeinheit 2 in Kontakt gebrachten Dreheinheit 21. Dabei kann die Steuereinheit 22 die Dreheinheit 21 solange ansteuern, bis der erste Drehmomentsensor des Schraubers 20 ein vorgegebenes Soll-Drehmoment erreicht. Der zweite Drehmomentsensor in der Prüfeinheit 2 ist geeignet, ein durch das Drehen der Dreheinheit 21 verursachtes Ist-Drehmoment zu messen.

Vorzugsweise enthalten die Daten, die ausgetauscht werden, Drehmomentwerte des Schraubers 20. Vorzugsweise ist die Prüfeinheit 2 ausgelegt, ein von der Dreheinheit 21 des Schraubers 20 ausgegebenes Drehmoment zu überprüfen. Ferner ist die Prüfeinheit 2 ausgelegt, ein Ergebnis der Überprüfung des von der Dreheinheit 21 des Schraubers 20 ausgegebenen Drehmoments als Wert eines Ist-Drehmoments des Schraubers 20 über die Datenaustauscheinheit 22a zur Steuereinheit 22 auszutauschen. Die Prüfeinheit 2 ist über die Datenaustauscheinheit 22a mit der Steuereinheit 22 verbunden. Die Steuereinheit (22) ist darüber hinaus mit dem Schrauber 20 verbunden. Die Steuereinheit 22 kann dabei z. B. direkt mit der Dreheinheit 21 des Schraubers 20 verbunden sein. Es ist aber auch möglich, dass die Steuereinheit 22 über den ersten Drehmomentsensor des Schraubers 20 und/oder andere Baugruppen in dem Schrauber 20 mit der Dreheinheit 21 verbunden ist.

Die Datenaustauscheinheit 22a ermöglicht es, ein von der Dreheinheit 21 ausgegebenes Ist-Drehmoment, welches von der Prüfeinheit 2 gemessen worden ist, über die Datenaustauscheinheit 22a an die Steuereinheit 22 des Schraubers 20 zu übermitteln. Daher ist es grundsätzlich möglich, die Prüfeinheit 2 als passive Baugruppe zu gestalten. Das bedeutet, dass in der Prüfeinheit 2 keine eigene Prüfsteuerung zusätzlich zur Steuereinheit (22) des Schraubers 20 vorgesehen sein muss und auch keine manuelle Eingabeeinheit zur Vorgabe eines Solldrehmoments, das die Prüfeinheit 2 von dem Schrauber 20 erwartet. Daher ist die in herkömmlichen Prüfsystemen gemäß Figur 4 vorgesehene Prüfsteuerung 2c* und die manuelle Eingabeeinheit 2b* im erfindungsgemäßen Prüfsystem nicht notwendig. Die Prüfeinheit 2 ist somit einfacher und kostengünstiger herzustellen.

Ferner ist es nicht mehr notwendig, dass eine Prüfperson ein vom Schrauber 20 auszugebendes Soll-Drehmoment über eine manuelle Eingabeeinheit in die fahrbare Messbank 2* eingibt. Dies ermöglicht es, die Prüfung von Schraubern 20 automatisch ablaufen zu lassen. Dadurch werden Personalaufwand und Personalkosten gesenkt und darüber hinaus der gesamte Prüfvorgang effektiv gestaltet.

Auf eine manuelle Eingabeeinheit an der Prüfeinheit 2 kann verzichtet werden, wenn die Steuereinheit 22 die Steuerdaten für ihren Schrauber 20 von einer zentralen Einheit erhält. Es karin aber nach wie vor wünschenswert sein, direkt an einer bestimmten Steuereinheit 22 eine bestimmte Sollwertvorgabe für den Schrauber 20 einzustellen. Selbst in diesem Fall ist eine unter Umständen manuell vorzunehmende Sollwertvorgabe jedoch lediglich an der Steuereinheit 22 des Schraubers 20 vorzunehmen und nicht auch noch zusätzlich an der Prüfeinheit 2. Es wird somit auch hier der Dateneingabeaufwand gegenüber dem Stand der Technik reduziert, wo sowohl eine Sollwerteingabe in der Steuereinheit 22 als auch in der fahrbaren Messbank 2* notwendig war. Darüber hinaus wird das Prüfverfahren durch die nur noch einmalige Sollwertvorgabe sicherer, da keine Fehler durch versehentlich verschiedene Sollwertvorgaben in Steuereinheit 22 und Prüfbank 2* auftreten können.

Wenn die Steuereinheit 22 über einen redundanten Hardwareaufbau verfügt, kann die Fähigkeitsprüfung über den redundanten Kanal erfolgen. Liegt diese Ausführung nicht vor, wird die Fähigkeitsprüfung durch eine separate Steuerung durchgeführt, wobei diese separate Steuerung dann mit der Steuereinheit 22 verknüpft ist.

Der mit Bezugsziffer 20 bezeichnete Schrauber ist in Figur 2 als handgeführter Schrauber mit einem Griff und einem Schrauberkopf schematisch dargestellt. Die Erfindung ist jedoch nicht auf die Verwendung von Handschraubern beschränkt. Vielmehr können auch vollautomatische und/oder fixierte Schrauber in das Prüfsystem gemäß der vorliegenden Erfindung Eingang finden.

In Figur 2 ist die Steuereinheit 22 zur Steuerung einer Drehung der mit der Prüfeinheit 2 in Kontakt gebrachten Dreheinheit 21 getrennt von dem Schrauber 20 vorgesehen. Die Steuerung 22 kann aber auch in dem Schrauber 20 integriert sein oder auf diesem angebracht sein. Die Steuereinheit 22 steuert die Dreheinheit 21 so lange an, bis der erste Drehmomentsensor des Schraubers ein vorgegebenes Soll-Drehmoment erreicht.

Die in den Figuren 1 bis 3 schematisch dargestellte Datenaustauscheinheit 22a kann eine elektrische Leitung umfassen, die die Prüfeinheit 2 und die Steuereinheit 22 miteinander verbindet. Es ist aber auch möglich, dass die Datenaustauscheinheit 22a eine drahtlose Kommunikationsverbindung zwischen der Prüfeinheit 2 und der Steuereinheit 22 umfasst. Eine solche drahtlose Kommunikationsverbindung kann eine Infrarot-Schnittstelle sein, oder auch eine Funkschnittstelle.

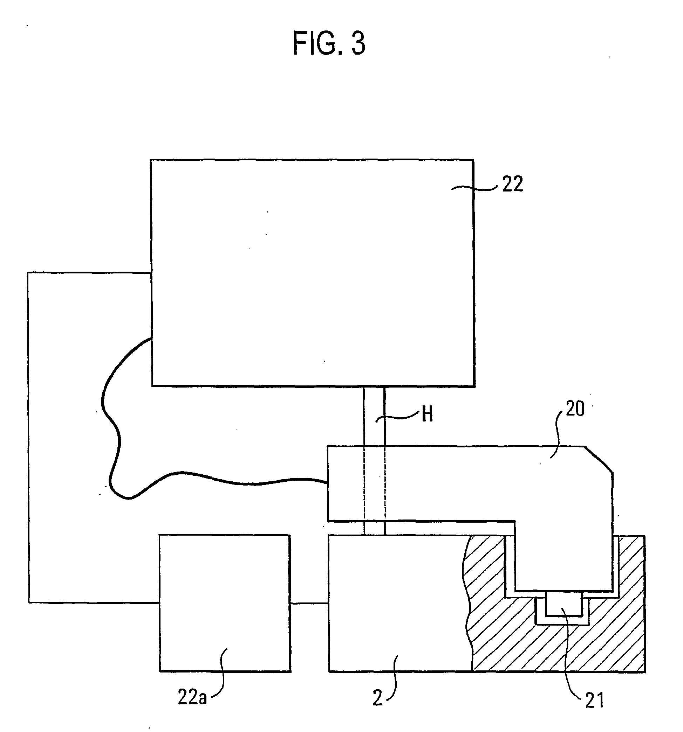

Figur 3 zeigt eine weitere bevorzugte Ausführungsform des Prüfsystems der vorliegenden Erfindung. Bezüglich der mit gleichen Bezugsziffern bezeichneten Komponenten wird auf die Beschreibung in Figur 1 und 2 verwiesen. In Figur 3 ist die Prüfeinheit 2 mit der Steuereinheit 22 des Schraubers 20 über eine Halterung H fest verbunden. Das System gemäß Figur 3 stellt somit eine kombinierte Schraubbearbeitungs/Schrauberprüfungs-Station dar.

Vorzugsweise weist dieses kombinierte System eine Aufnahmeeinheit zur Aufnahme des Schraubers 20 auf. Dabei ist es von Vorteil, dass die Aufnahmeeinheit so ausgelegt ist, den Schrauber 20 so aufzunehmen, dass die Dreheinheit 21 des Schraubers 20 in einer Anfangsdrehposition mit einer Gegendrehmoment-Erzeugungseinrichtung der Prüfeinheit 2 in Kontakt ist, d.h. in diese eingreift. Vorzugsweise ist die Aufnahmeeinheit als Ablageschale für den Schrauber 20 ausgebildet und die Prüfeinheit 2 in diese Ablageschale integriert. Diese Ablageschale kann dann über eine Halterung H fest mit der Steuereinheit 22 verbunden sein.

Gemäß einer bevorzugten Ausführungsform der vorliegenden Erfindung weist die Ablageschale einen Spannbügel zum Fixieren des Schraubers 20 in der Ablageschale auf. Dies ermöglicht es, dass ein Benutzer des Schraubers 20 in einer Produktionspause den Schrauber über den Spannbügel in der Ablageschale fixiert und gleichzeitig den Prüfablauf für eine Maschinenfähigkeitsuntersuchung startet. Der Prüfvorgang kann während der Pause vollautomatisch ablaufen.

Die voranstehend beschriebene Ausführungsform hat dan Vorteil, dass der Personalaufwand zur Durchführung einer Überprüfung eines Schraubers gering ist und die Prüfung von Schraubern somit kostengünstig durchgeführt werden kann. Nach dem Prüfvorgang erfolgt eine Auswertung der abgeprüften Daten mit einer Prüfaussage. Die Prüfaussage kann anzeigen, dass das Werkzeug fähig ist; dann wird der Schrauber 20 für die weitere Produktion freigegeben. Falls die Prüfaussage anzeigt, dass das Werkzeug nicht fähig ist, wird die Schraubanlage für die Produktion gesperrt, um einen etwaigen Produktionsausschuss zu vermeiden. Die Prüfaussage kann optisch, z.B. über eine Anzeige-/Warnlampe oder über ein Display, oder akustisch, z.B. über einen Warnton/Bestätigungston, ausgegeben werden. Gemäß einer weiteren Ausführungsform der vorliegenden Erfindung kann die Prüfeinheit 2 auch in die Steuereinheit 22 des Schraubers 20 integriert sein.

Die oben beschriebenen Prüfsysteme finden vorzugsweise Einsatz bei der Prüfung von handgeführten Schraubern. Es wird jedoch betont, dass die vorliegende Erfindung in ihrer Anwendung nicht auf handgeführte Schrauber beschränkt ist.

### AUSFÜHRLICHE BESCHREIBUNG VON WEITEREN AUSFÜHRUNGSFORMEN DER ERFINDUNG

Wie bereits eingangs erläutert, werden zur Durchführung einer Fähigkeitsprüfung von Schraubwerkzeugen im Stand der Technik verschiedene Methoden verwendet. So wird z. B. zum Überprüfen des von dem Schraubwerkzeug ausgegebenen Drehmoments ein Drehmomentaufnehmer mit Gegenmesssystem auf das Schraubwerkzeug aufgesteckt. Bei handgeführten Schraubwerkzeugen kommen sogenannte Knickschlüssel zum Einsatz, mit denen der Bediener selbst das Drehmoment einer mit dem zu überprüfenden Schrauber angezogenen Schraube überprüft. Ferner kommt in der Montagetechnik häufig eine fahrbare Messbank zum Einsatz, mit der mehrere Schrauber hintereinander auf ihre Fähigkeit überprüft werden können.

All diesen Methoden ist gemeinsam, dass sie entweder einen erhöhten Personalaufwand und hohe Gerätekosten verursachen oder nur ungenaue Aussagen über die Genauigkeit des Schraubwerkzeugs liefern. So ist z.B. ein hoher Personalaufwand notwendig, um die Fähigkeitsüberprüfung der eingesetzten Schrauber auf einem hohen Niveau zu halten, da dies nur möglich ist, wenn die Prüfzyklen möglichst kurz gehalten werden. Verlängert man die Prüfzyklen, z. B. auf einmal pro Woche, birgt dies das Risiko, dass ein Schrauber, der nach der letzten Fähigkeitsüberprüfung als IO (in Ordnung) beurteilt wurde, dann aber während des weiteren Einsatzes fehlerhaft wurde, d.h. NIO (nicht in Ordnung), bis zur nächsten Fähigkeitsprüfung eine große Zahl von Ausschussstücken produziert, was zu aufwendiger Nacharbeit oder im Falle eines verspäteten Bemerkens bis zu einer Rückholaktion der gefertigten Stücke führen kann. Um letzteres zu vermeiden, wurde bisher der erhöhte Aufwand, der mit kurzen Prüfzyklen verbunden ist, in Kauf genommen, um möglichst genaue Aussagen über die Fähigkeit der Schraubwerkzeuge zu erhalten.

Die herkömmlichen Methoden zur Fähigkeitsprüfung von Schraubwerkzeugen haben also den Nachteil, dass die mit hohem Aufwand und Kosten verbunden sind.

Ferner wurde die Beobachtung gemacht, dass eine immer weitere Verkürzung der Prüfzyklen nicht mehr nennenswert zu einer Verringerung der Produktionsausschussquote beiträgt. Die herkömmlichen Verfahren zur Fähigkeitsprüfung weisen somit zusätzlich den Nachteil auf, die Fähigkeit von Schraubwerkzeugen nicht zuverlässig überprüfen zu können.

Wie voranstehend erläutert, ist es im Stand der Technik nicht möglich, Schraubwerkzeuge effektiv und zuverlässig bezüglich ihrer Fähigkeit zu überprüfen, im wesentlichen deshalb, weil die Überprüfung des Schraubers bei jeder Fähigkeitsüberprüfung immer nur in einem einzigen Betriebspunkt überprüft wird. So wird im Stand der Technik während einer Fähigkeitsprüfung ein Schrauber auf ein bestimmtes Nenndrehmoment in einer Position der im Schrauber befindlichen funktionalen Bauteile zueinander, wie z. B. Zahnräder des Abtriebs, überprüft. Die Position der im Schrauber befindlichen funktionalen Bauteile zueinander ist bei jeder Fähigkeitsprüfung rein zufällig, so dass über eine Vielzahl von aufeinanderfolgenden Fähigkeitsprüfungen der Schrauber in manchen Positionen der im Schrauber befindlichen funktionalen Bauteile mehrmals, in anderen Positionen der Schrauber überhaupt nicht überprüft wird.

Es ist daher wünschenswert, ein Prüfverfahren und ein Prüfsystem bereitzustellen, welches eine effektive und zuverlässige Prüfung eines Schraubers ermöglicht.

Dies wird ermöglicht durch ein Verfahren zum Prüfen von Schraubern mit einer Dreheinheit und einem ersten Drehmomentsensor umfassend die folgenden Schritte: a) Kontaktieren zumindest der Dreheinheit des Schraubers in eine Anfangsdrehposition der Dreheinheit mit einer Prüfeinheit, welche eine Gegendrehmoment-Erzeugungseinrichtung und einen zweiten Drehmomentsensor umfasst; b) Vorgeben eines Soll-Drehmoments, welches der Schrauber ausgeben soll; c) Drehen der Dreheinheit, bis der erste Drehmomentsensor des Schraubers das vorgegebene Soll-Drehmoment erreicht; d) Messen eines durch das Drehen der Dreheinheit verursachten Ist-Drehmoments mit dem zweiten Drehmomentsensor; e) Vergleichen des vorgegebenen Soll-Drehmoments des Schraubers mit dem vom zweiten Drehmomentsensor gemessenen Ist-Drehmoment; f) Zurückdrehen der Dreheinheit über die Anfangsdrehposition hinaus, um einen vorgegebenen Winkelbetrag in eine andere Anfangsdrehposition.

Dies wird ferner ermöglicht durch ein Prüfsystem zum Prüfen von Schraubern mit einer Dreheinheit und einem ersten Drehmomentsensor, umfassend: eine Prüfeinheit mit einer Gegendrehmoment-Erzeugungseinrichtung und einem zweiten Drehmomentsensor, welche geeignet ist, zumindest mit der Dreheinheit zumindest eines Schraubers in einer Anfangsdrehposition der Dreheinheit in Kontakt gebracht zu werden; eine Steuereinheit zum Steuern einer Drehung der mit der Prüfeinheit in Kontakt gebrachten Dreheinheit, bis der erste Drehmomentsensor ein vorgegebenes Soll-Drehmoment erreicht, wobei der zweite Drehmomentsensor geeignet ist, ein durch das Drehen der Dreheinheit verursachtes Ist-Drehmoment zu messen; eine Vergleichseinheit zum Vergleichen des vorgegebenen Soll-Drehmoments des Schraubers mit dem vom zweiten Drehmomentsensor gemessenen Ist-Drehmoment, wobei die Steuereinheit ausgelegt ist, die Dreheinheit über die Anfangsdrehposition hinaus um einen vorgegebenen Winkelbetrag in eine andere Anfangsdrehposition zurückzudrehen.

Durch das Zurückdrehen der Dreheinheit über die Anfangsdrehposition hinaus um einen vorgebenen Winkelbetrag in eine andere Anfangsdrehposition kann erreicht werden, dass sich die im Schrauber befindlichen funktionalen Bauteile des Abtriebs zueinander zuverlässig in einer anderen Position befinden als der Position der im Schrauber befindlichen funktionalen Bauteile des Abtriebs zueinander beim Kontaktieren der Dreheinheit des Schrauber in der ersten Anfangsdrehposition der Dreheinheit mit der Prüfeinheit. Dadurch kann verhindert werden, dass der Schrauber in einer folgenden Überprüfung zufällig noch einmal in derselben Anfangsdrehposition der Dreheinheit, bzw. in derselben der im Schrauber befindlichen funktionalen Bauteile des Abtriebs zueinander, wie z.B. der Zahnräder des Abtriebs, überprüft wird.

Die im Schrauber befindlichen funktionalen Bauteile werden also in eine definiert andere Position zueinander gebracht als der Position, in der sie bei der Überprüfung des ersten Betriebspunktes des Schraubers zueinander standen. Somit wird eine effektive und zuverlässige Prüfung des Schraubers ermöglicht.

Vorzugsweise wird die Dreheinheit über die Anfangsdrehposition hinaus um den vorgegebenen Winkelbetrag in die andere Anfangsdrehposition zurückgedreht, für den Fall, dass das Soll-Drehmoment und das Ist-Drehmoment höchstens um einen vorgegebenen Betrag voneinander abweichen. Damit wird erreicht, dass ein Schrauber, dessen Ist-Drehmoment nur unwesentlich vom Soll-Drehmoment abweicht, trotzdem noch als IO bezüglich des überprüften Betriebspunktes bewertet werden kann. Der vorgegebene . Abweichungsbetrag bildet somit eine Toleranzgrenze für Abweichungen zwischen Soll-Drehmoment und Ist-Drehmoment. Vorzugsweise werden folgende Schritte zumindest einmal wiederholt: c) Drehen der Dreheinheit, bis der erste Drehmomentsensor des Schraubers das vorgegebene Soll-Drehmoment erreicht; d) Messen eines durch das Drehen der Dreheinheit verursachten Ist-Drehmoments mit dem zweiten Drehmomentsensor; e) Vergleichen des vorgegebenen Soll-Drehmoments des Schraubers mit dem vom zweiten Drehmomentsensor gemessenen Ist-Drehmoment; f) Zurückdrehen der Dreheinheit über die Anfangsdrehposition hinaus um einen vorgegebenen Winkelbetrag in eine andere Drehposition. Dabei wird vorzugsweise bei einer Wiederholung des Schrittes c) die Dreheinheit beginnend aus der Anfangsdrehposition gedreht, in der sich die Dreheinheit nach der unmittelbar vorangehenden Durchführung des Schrittes f) befindet. Die bei einem vorangehenden Zurückdrehen der Dreheinheit über eine Anfangsdrehposition hinaus um einen vorgegebenen Winkelbetrag erreichte andere Anfangsdrehposition wird somit als die eine Anfangsdrehposition bei einem nachfolgenden Drehen der Dreheinheit, bis der erste Drehmomentsensor des Schraubers das vorgegebene Soll-Drehmoment erreicht, verwendet. Dadurch kann erreicht werden, dass eine wiederholte Prüfung des Schraubers an einem definierten Betriebspunkt erfolgt, der sich nicht nur zufällig, sondern mit Sicherheit von dem Betriebspunkt der vorangehenden Überprüfung unterscheidet. Hierdurch wird zum einen eine effektive Überprüfung des Schraubers erreicht, da Doppelüberprüfungen an ein und demselben Betriebspunkt des Schraubers vermieden werden. Zum anderen wird die Überprüfung des Schraubers insgesamt zuverlässiger, da eine größere Anzahl verschiedener Betriebspunkte überprüft wird, als wenn bei einer zufälligen Wahl der Anfangsdrehposition der Dreheinheit für mehrere aufeinander folgende Prüfabläufe unter Umständen manche Betriebspunkte mehrfach überprüft werden.

Ferner kann die oben beschriebene Wiederholung der Schritte c) bis f) auch eine Wiederholung der Schritte a) und/oder b) einschließen. So kann z.B. vor der Wiederholung der Schritte c) bis f) ein anderer Wert für das Soll-Drehmoment vorgegeben werden, den der Schrauber ausgeben soll.

Vorzugsweise ergibt das Produkt aus der Anzahl der Wiederholungen, bzw. der Durchführungen, der Schritte c) bis f) und dem Wert des vorgegebenen Winkelbetrags mindestens 360°. Dadurch kann erreicht werden, dass der volle Funktionsbereich des Abtriebs eines Schraubers in Abständen des vorgegebenen Winkelbetrags überprüft wird. Wie oben bereits erläutert, wird dabei zumindest beim ersten Durchprüfen eines Vollwinkelbereichs von 360° kein Betriebspunkt mehr als einmal überprüft, wodurch der gesamte Prüfvorgang sehr effektiv ist. Ferner wird der Schrauber bei jedem Durchlauf der Schritte c) bis f) in jeweils voneinander verschiedenen Positionen der im Schrauber befindlichen funktionalen Bauteile, wie z. B. Zahnräder des Abtriebs, überprüft. Somit wird der gesamte Prüfungsablauf nicht nur besonders effektiv gestaltet, sondern liefert auch ein zuverlässiges Prüfergebnis, da der Abtrieb in vielen voneinander verschiedenen Betriebspositionen überprüft wird.

Ferner ist es vorteilhaft, den Wert des vorgegebenen Winkelbetrags, um den die Dreheinheit über die Anfangsdrehposition hinaus in eine andere Anfangsdrehposition zurückgedreht wird, kleiner oder gleich dem Quotienten aus 360° und der Anzahl der Zähne eines Zahnrades in einem Schrauber zu wählen, welches von allen Zahnrädern in dem Schrauber die meisten Zähne aufweist. Dadurch kann erreicht werden, dass bei Wiederholung der Schritte c) bis f) so oft, dass das Produkt aus der Anzahl der Wiederholungen und dem Wert des vorgegebenen Winkelbetrags mindestens 360° ergibt, der gesamte Abtrieb des Schraubers vollständig überprüft wird. Damit kann sichergestellt werden, dass ein Fehler im Abtrieb des Schraubers, der z.B. auf der Schadhaftigkeit eines einzelnen Zahnes eines der Zahnräder im Abtrieb des Schraubers beruht, zuverlässig erkannt wird. Selbst bei dieser zuvor beschriebenen Ausführungsform eines Prüfungsablaufs eines Schraubers ist der gesamte Prüfungsvorgang äußerst effektiv, da kein Betriebspunkt des Schraubers mehr als einmal überprüft wird.

Ferner ist vorteilhaft, dass der Schrauber als fähig beurteilt wird, wenn bei jedem Vergleich des Soll-Drehmoments des Schraubers mit dem Ist-Drehmoment der Prüfeinheit das Soll-Drehmoment und das Ist-Drehmoment höchstens um den vorgegebenen Betrag voneinander abweichen. Dadurch kann erreicht werden, dass ein Schrauber, der zumindest in einem Betriebspunkt eine Fehlfunktion aufweist, zuverlässig als NIO (nicht in Ordnung/nicht fähig) beurteilt wird, und aus dem Produktionsprozess entfernt wird.

Vorzugsweise steht die Dreheinheit des Schraubers mit der Gegendrehmoment-Erzeugungseinrichtung der Prüfeinheit über einen Freilauf in Kontakt, der gewährleistet, dass der Kontakt zwischen Dreheinheit und Gegendrehmoment-Erzeugungseinrichtung während des Zurückdrehens der Dreheinheit kraftlos wird. Dabei kann der Freilauf bewirken, dass während des Zurückdrehens der Dreheinheit die Gegendrehmoment-Erzeugungseinrichtung entspannt wird und der zweite Drehmomentsensor zurückgesetzt wird. Dadurch kann erreicht werden, dass bei einem Zurückdrehen der Dreheinheit in einem Schritt f) die im Schrauber befindlichen funktionalen Bauteile, wie z. B. die Zahnräder des Abtriebs, für einen nachfolgenden Schritt c) in eine neue, definierte (d.h. nicht zufällig bestimmte) Ausgangsposition gelangen. Dabei entspricht einer bestimmten Anfangsdrehposition der Dreheinheit des Schraubers eine bestimmte Position der im Schrauber befindlichen funktionalen Bauteile zueinander.

Ferner ist es möglich, dass die Gegendrehmoment-Erzeugungseinrichtung ein Paar von Tellerfedern beinhaltet.

Vorzugsweise ist der zweite Drehmomentsensor geeicht. Beispielsweise kann der zweite Drehmomentsensor eine geeichte Drehkette beinhalten. Ferner ist es möglich, dass der zweite Drehmomentsensor einen geeichten Dehnmessstreifen beinhaltet. Durch die Verwendung eines geeichten Drehmomentsensors in der Prüfeinheit wird ein genaues und verlässliches Prüfergebnis gewährleistet.

Vorzugsweise handelt es sich bei den voranbeschriebenen Schraubern um handgeführte Schrauber. Es wird jedoch betont, dass die vorliegende Erfindung in ihrer Anwendung nicht auf handgeführte Schrauber beschränkt ist, sondern z.B. auch auf vollautomatische Schrauber und fixierte Schrauber angewandt werden kann.

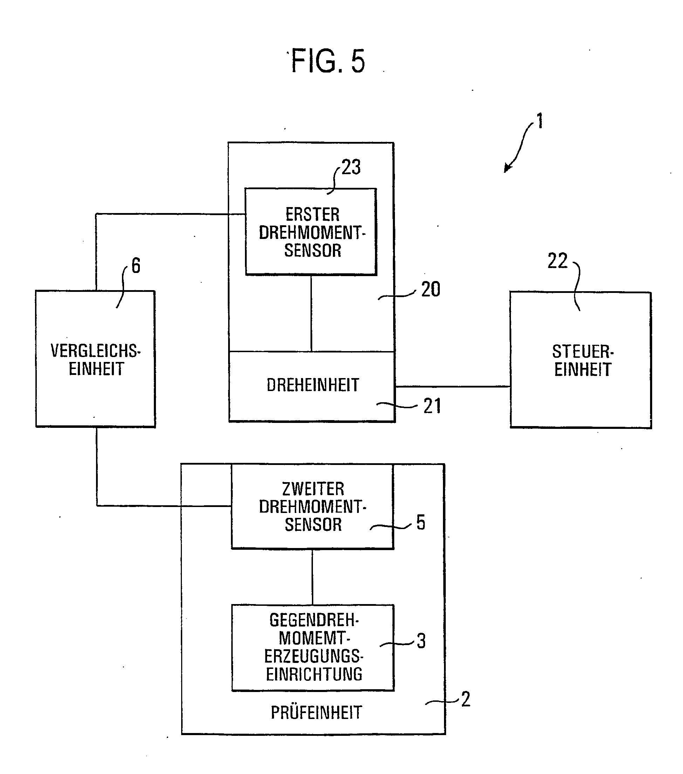

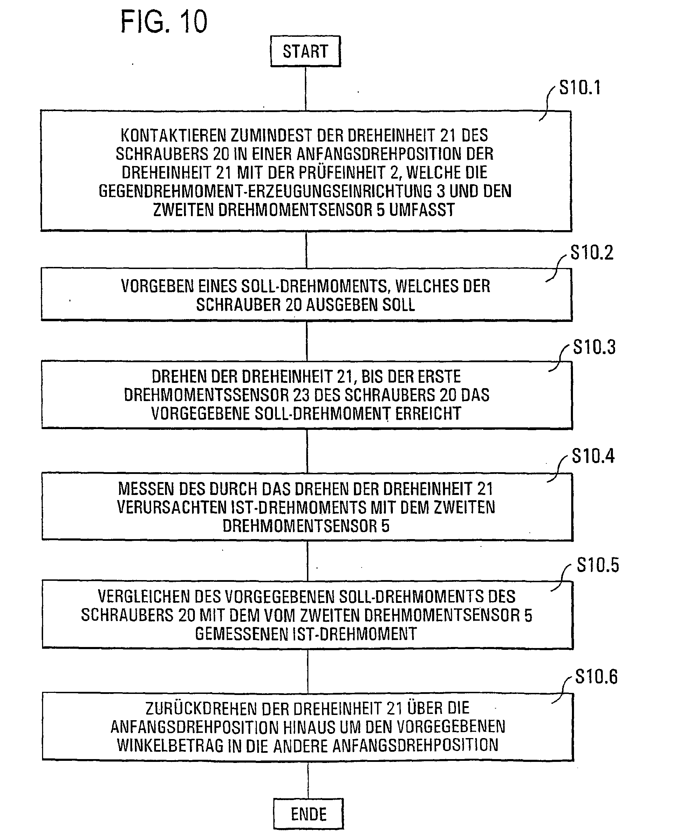

Mit Bezug auf die Figuren 5 und 10 wird nun zunächst prinzipiell das erfindungsgemäße Prüfsystem bzw. das erfindungsgemäße Prüfverfahren beschrieben.

Fig. 5 zeigt ein Blockdiagramm des erfindungsgemäßen Prüfsystems 1. Das Prüfsystem 1 umfasst einen zu prüfenden Schrauber 20 mit einer Dreheinheit 21 und einem ersten Drehmomentsensor 23. Ferner umfasst das Prüfsystem 1 eine Prüfeinheit 2 mit einer Gegendrehmoment-Erzeugungseinrichtung 3 und einem zweiten Drehmomentsensor 5, wobei die Prüfeinheit 2 geeignet ist, zumindest mit der Dreheinheit 21 des Schraubers 20 in einer Anfangsdrehposition der Dreheinheit 21 in Kontakt gebracht zu werden. Das Prüfsystem 1 umfasst ferner eine Steuereinheit 22 zum Steuern einer Drehung der mit der Prüfeinheit 2 in Kontakt gebrachten Dreheinheit 21, bis der erste Drehmomentsensor 23 ein vorgegebenes Soll-Drehmoment erreicht. Dabei ist der zweite Drehmomentsensor 5 geeignet, ein durch das Drehen der Dreheinheit 21 verursachtes Ist-Drehmoment zu messen. Außerdem umfasst das Prüfsystem 1 eine Vergleichseinheit 6 zum Vergleichen des vorgegebenen Soll-Drehmoments des Schraubers 20 mit dem vom zweiten Drehmomentsensor 5 gemessenen Ist-Drehmoment. Ferner ist die Steuereinheit 22 ausgelegt, die Dreheinheit 21 über die Anfangsdrehposition hinaus um einen vorgegebenen Winkelbetrag in eine andere Anfangsdrehposition zurückzudrehen.

Wie der Fig. 5 entnommen werden kann, besteht das Prüfsystem 1 der vorliegenden Erfindung hauptsächlich aus den folgenden Bestandteilen: einem Schrauber 20, einer Prüfeinheit 2, einer Vergleichseinheit 6 und einer Steuereinheit 22.

Wie aus dem Flussdiagramm in Fig. 10 zu ersehen ist, umfasst das erfindungsgemäße Prüfverfahren zum Prüfen von Schraubern 20 mit einer Dreheinheit 21 und einem ersten Drehmomentsensor 23 folgende Schritte: a) Kontaktieren S10.1 zumindest der Dreheinheit 21 des Schraubers 20 in einer Anfangsdrehposition der Dreheinheit 21 mit der Prüfeinheit 2, welche die Gegendrehmoment-Erzeugungseinrichtung 3 und den zweiten Drehmomentsensor 5 umfasst; b) Vorgeben S10.2 eines Soll-Drehmoments, welches der Schrauber 20 ausgeben soll; c) Drehen S10.3 der Dreheinheit 21, bis der erste Drehmomentsensor 23 des Schraubers 20 das vorgegebene Soll-Drehmoment erreicht; d) Messen S10.4 des durch das Drehen der Dreheinheit 21 verursachten Ist-Drehmoments mit dem zweiten Drehmomentsensor 5; e) Vergleichen S10.5 des vorgegebenen Soll-Drehmoments des Schraubers 20 mit dem vom zweiten Drehmomentsensor 5 gemessenen Ist-Drehmoment; f) Zurückdrehen S10.6 der Dreheinheit 21 über die Anfangsdrehposition hinaus um den vorgegebenen Winkelbetrag in die andere Anfangsdrehposition.

Mit dem zuvor beschriebenen Prüfsystem bzw. mit dem zuvor beschriebenen Prüfverfahren gemäß der vorliegenden Erfindung ist es möglich, nach der Überprüfung eines Schraubers 20 an einem Betriebspunkt, der einer bestimmten Position der im Schrauber befindlichen funktionalen Bauteile zueinander entspricht, wobei der Schrauber 20 von einer ersten Anfangsdrehposition der Dreheinheit 21 aus geprüft wird, den Schrauber in eine definierte andere Anfangsdrehposition der Dreheinheit 21 mit einer definierten anderen Position der im Schrauber befindlichen funktionalen Bauteile des Abtriebs 27 zu bringen.

Durch das Zurückdrehen der Dreheinheit über die Anfangsdrehposition hinaus um einen vorgebenen Winkelbetrag in eine andere Anfangsdrehposition kann also erreicht werden, dass sich die im Schrauber befindlichen funktionalen Bauteile des Abtriebs zueinander zuverlässig in einer anderen Position befinden als der Position der im Schrauber befindlichen funktionalen Bauteile des Abtriebs zueinander beim Kontaktieren der Dreheinheit des Schrauber in der ersten Anfangsdrehposition der Dreheinheit mit der Prüfeinheit. Dadurch kann verhindert werden, dass der Schrauber in einer folgenden Überprüfung zufällig noch einmal in derselben Anfangsdrehposition der Dreheinheit, bzw. in derselben der im Schrauber befindlichen funktionalen Bauteile des Abtriebs zueinander, wie z.B. der Zahnräder des Abtriebs, überprüft wird.

Die im Schrauber befindlichen funktionalen Bauteile werden also in eine definiert andere Position zueinander gebracht als der Position, in der sie bei der Überprüfung des ersten Betriebspunktes des Schraubers zueinander standen. Somit wird eine effektive und zuverlässige Prüfung des Schraubers ermöglicht.

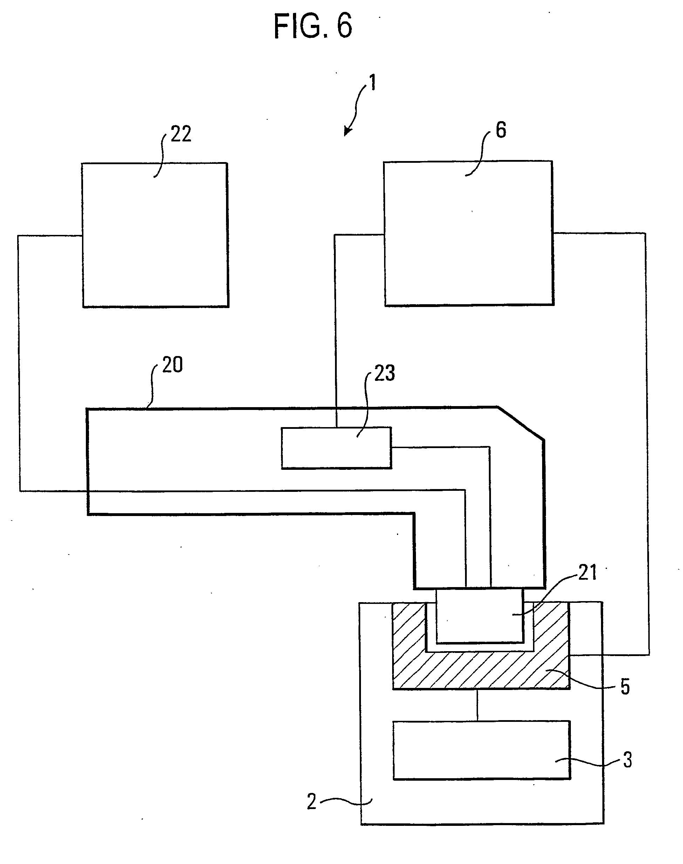

Fig. 6 zeigt ein funktionales Schema einer Ausführungsform des Prüfsystems der vorliegenden Erfindung. Die Bezugzeichen entsprechen gänzlich jenen in Fig. 5, so dass zur Beschreibung der einzelnen Komponenten, die in Fig. 6 mit diesen Bezugszeichen referenziert werden, auf die Beschreibung zur Fig. 5 verwiesen werden kann.

Der Schrauber 20 umfasst dabei eine Dreheinheit 21 und einen ersten Drehmomentsensor 23, der mit der Dreheinheit 21 verbunden ist. Die Dreheinheit 21 kann z.B. eine Stecknuss umfassen, deren Form an die zu bearbeitende Schraubstelle angepasst ist. Der erste Drehmomentsensor 23 des Schraubers 20 ist geeignet, ein der Dreheinheit 21 vorgegebenes Soll-Drehmoment zu messen.

Die Prüfeinheit 2 umfasst einen zweiten Drehmomentsensor 5 und eine Gegendrehmoment-Erzeugungseinrichtung 3, die mit dem zweiten Drehmomentsensor 5 verbunden ist.

Der zweite Drehmomentsensor 5 der Prüfeinheit 2 ist über die Vergleichseinheit 6 mit dem ersten Drehmomentsensor 23 des Schraubers 20 verbunden. Dabei ist die Vergleichseinheit 6 dazu ausgelegt, das vorgegebene Soll-Drehmoment des Schraubers 20 vom ersten Drehmomentsensor 23 zu empfangen, das vom zweiten Drehmomentsensor 5 der Prüfeinheit 2 gemessene Ist-Drehmoment zu empfangen, und diese beiden Drehmomentwerte miteinander zu vergleichen.

Die Steuereinheit 22 ist mit dem Schrauber 20 verbunden. Dabei kann die Steuereinheit 22 direkt oder indirekt über andere Baugruppen des Schraubers 20, z.B. den ersten Drehmomentsensor 23, mit der Dreheinheit 21 verbunden sein. Die Steuereinheit 22 steuert eine Drehung der mit der Prüfeinheit 2 in Kontakt gebrachten Dreheinheit 21, bis der erste Drehmomentsensor 23 des Schraubers 20 ein vorgegebenes Soll-Drehmoment erreicht. Ferner ist die Steuereinheit 22 ausgelegt, die Dreheinheit 21 über eine Anfangsdrehposition hinaus um einen vorgegebenen Winkelbetrag in eine andere Drehposition zurückzudrehen.

Der mit Bezugsziffer 20 bezeichnete Schrauber ist in Fig. 6 als handgeführter Schrauber mit einem Griff und einem Schrauberkopf schematisch dargestellt. Die Erfindung ist jedoch nicht auf die Verwendung von Handschraubern beschränkt. Vielmehr können auch vollautomatische Schrauber in das Prüfsystem und das Prüfverfahren gemäß der vorliegenden Erfindung Eingang finden.

Die Prüfeinheit 2 weist einen zweiten Drehmomentsensor 5 auf, der ausgebildet ist, eine Dreheinheit 21 des Schraubers 20 so aufzunehmen, dass die Dreheinheit 21 und der Drehmomentsensor 5 miteinander in Eingriff kommen. Beispielsweise weist die Kontaktfläche des zweiten Drehmomentsensors 5 die Form eines Schraubenkopfes auf und die Dreheinheit 21 die Form einer zu diesem Schraubenkopf passenden Stecknuss auf. Eine durch die Dreheinheit 21 vermittelte Drehbewegung wird somit über den zweiten Drehmomentsensor 5 an die Gegendrehmoment-Erzeugungseinrichtung 3 der Prüfeinheit 2 vermittelt. Die Gegendrehmoment-Erzeugungseinrichtung 3 erzeugt ein dem von der Dreheinheit 21 verursachten ausgegebenen Ist-Drehmoment entgegengesetzt wirkendes Gegendrehmoment. Das von der Gegendrehmoment-Erzeugungseinrichtung 3 erzeugte Gegendrehmoment hält sich mit dem durch das Drehen der Dreheinheit verursachten Ist-Drehmoment das Gleichgewicht. In diesem Gleichgewichtszustand misst der zweite Drehmomentsensor 5 der Prüfeinheit 2 das von dem Schrauber 20 ausgegebene Ist-Drehmoment durch Messen des Betrages des an dem zweiten Drehmomentsensor 5 anliegenden Drehmoments. Vorzugsweise handelt es sich bei dem zweiten Drehmomentsensor 5 der Prüfeinheit 2 um einen geeichten Drehmomentsensor, um eine zuverlässige Aussage über die Größe des vom Schrauber 20 ausgegebenen Ist-Drehmoments erhalten zu können. Der zweite Drehmomentsensor 5 kann dabei z. B. eine geeichte Drehkette beinhalten. Gemäß einem weiteren Beispiel umfasst der zweite Drehmomentsensor 5 einen geeichten Dehnmessstreifen, der auf der Drehachse der Prüfeinheit 2 aufgebracht ist. Durch die Torsion der Drehachse der Prüfeinheit 2 wird der Dehnmessstreifen gedehnt und diese Dehnung kann als Maß für das an der Drehachse anliegende Drehmoment verwendet werden. Ferner kann die Gegendrehmoment-Erzeugungseinrichtung ein Paar von Tellerfedern beinhalten, welches ein weiches Einfedern der Gegendrehmomenteinrichtung bei Beaufschlagung der Prüfeinheit 2 mit dem Drehmoment des Schraubers 20 ermöglicht.

In Fig. 6 ist die Steuereinheit 22 zur Steuerung einer Drehung der mit der Prüfeinheit 2 in Kontakt gebrachten Dreheinheit 21 getrennt von dem Schrauber 20 vorgesehen. Die Steuerung 22 kann aber auch in dem Schrauber 20 integriert sein oder auf diesem angebracht sein. Die Steuereinheit 22 steuert die Dreheinheit 21 so lange an, bis der erste Drehmomentsensor 23 ein vorgegebenes Soll-Drehmoment erreicht. In Fig. 6 ist der erste Drehmomentsensor 23 in dem Schrauber integriert. Der erste Drehmomentsensor 23 kann aber auch auf dem Schrauber 20 angebracht sein oder extern zu dem Schrauber 20 vorgesehen sein.

Der erste Drehmomentsensor 23 des Schraubers 20 übermittelt den Wert des Drehmoments, wenn das vorgegebene Soll-Drehmoment erreicht ist, an die Vergleichseinheit 6. Ferner übermittelt der zweite Drehmomentsensor 5 der Gegendrehmoment-Erzeugungseinrichtung 3 das von ihm gemessene Ist-Drehmoment an die Vergleichseinheit 6. Die Vergleichseinheit 6 vergleicht das vorgegebene Soll-Drehmoment des Schraubers 20 mit dem vom zweiten Drehmomentsensor 5 gemessenen Ist-Drehmoment. Vorzugsweise wird der Schrauber 20 dann als fähig beurteilt, wenn bei dem Vergleich des Soll-Drehmoments des Schraubers 20 mit dem Ist-Drehmoment der Prüfeinheit 2 das Soll-Drehmoment und das Ist-Drehmoment höchstens um einen vorgegebenen Betrag voneinander abweichen.

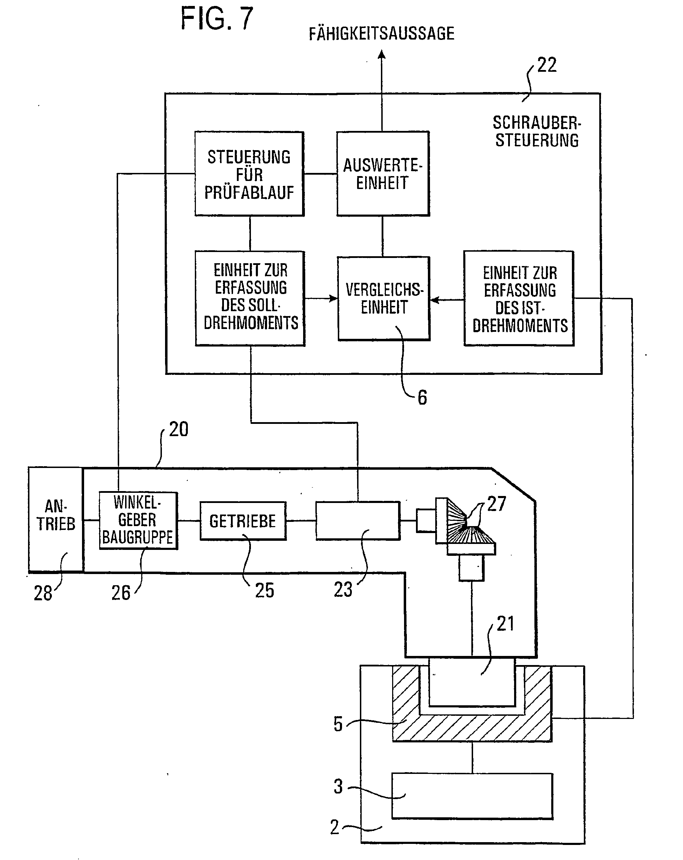

Fig. 7 zeigt eine weitere bevorzugte Ausführungsform des Prüfsystems 1 der vorliegenden Erfindung. Bezüglich der mit gleichen Bezugsziffern bezeichneten Komponenten wird auf die Beschreibung in Fig. 5 und 6 verwiesen. In Fig. 7 ist die Vergleichseinheit 6 in die Steuereinheit 22, die auch als Schraubersteuerung bezeichnet wird, integriert. Ferner weist die Schraubersteuerung 22 eine Einheit zur Erfassung des Soll-Drehmoments auf, die mit dem ersten Drehmomentsensor 23 des Schraubers 20 verbunden ist. Der erste Drehmomentsensor 23 übermittelt das Soll-Drehmoment an die Einheit zur Erfassung des Soll-Drehmoments, welche wiederum den Wert des Soll-Drehmoments an die Vergleichseinheit 6 weitergibt. Außerdem umfasst die Schraubersteuerung 22 eine Einheit zur Erfassung des Ist-Drehmoments. Der zweite Drehmomentsensor 5 der Prüfeinheit 2 übermittelt das von ihm gemessene Ist-Drehmoment an die Einheit zur Erfassung des Ist-Drehmoments, welche wiederum den Wert des Ist-Drehmoments an die Vergleichseinheit 6 weitergibt. Die Schraubersteuerung 22 umfasst ferner eine Steuerung für einen Prüfablauf zur Steuerung mehrerer Prüfungen eines Schraubers 20 in mehreren Betriebspunkten des Schraubers 20 hintereinander. Ferner umfasst die Schraubersteuerung 22 eine Auswerteeinheit, die mit der Steuerung für den Prüfablauf und der Vergleichseinheit 6 verbunden ist. Über die Auswerteeinheit erfolgt nach abgeschlossenem Prüfablauf die Ausgabe einer Fähigkeitsaussage. Die Fähigkeitsaussage beinhaltet entweder eine IO-Aussage, d. h. der Schrauber 20 wird als fähig beurteilt, oder beinhaltet eine NIO-Aussage, wonach der Schrauber 20 als fehlerhaft bewertet wird.

Die Steuerung für den Prüfablauf ist über eine Winkelgeberbaugruppe 26, ein Getriebe 25, den ersten ' Drehmomentsensor 23 und einen Abtrieb 27 mit der Dreheinheit 21 verbunden. Der Abtrieb 27 des Schraubers 20 ist in Fig. 7 exemplarisch mit zwei Kegelzahnrädern dargestellt. Der Abtrieb 27 kann aber noch mehrere und auch verschiedenartige Zahnräder und andere Komponenten beinhalten. Ein Antrieb 28 versorgt den Schrauber 20 mit der notwendigen Energie. Der Antrieb 28 kann dabei direkt mit dem Schrauber 20 verbunden sein, es ist aber auch möglich, dass die Energiezufuhr von außerhalb erfolgt.

Ein Grund für eine mögliche Abweichung des von der Dreheinheit 21 abgegebenen Ist-Drehmoments von dem vorgegebenen Soll-Drehmoment kann in einem Drehmomentverlust innerhalb des Abtriebs 27 gegeben sein. Der Drehmomentverlust im Abtrieb 27 kann dabei von der Position der im Abtrieb befindlichen funktionalen Bauteile zueinander abhängen. So kann z. B. in einer Situation, wo ein schadhafter Zahn eines der Zahnräder des Abtriebs 27 in ein anderes Zahnrad eingreift, ein Drehmomentverlust oder eine Drehmomentvergrößerung in diesem Betriebspunkt des Schraubers 20 erfasst werden, was zu einer Abweichung zwischen Soll-Drehmoment und Ist-Drehmoment des Schraubers 20 führen kann. In allen anderen Drehpositionen des Zahnrades mit dem schadhaften Zahn hingegen wird unter Umständen kein Drehmomentverlust im Abtrieb 27 des Schraubers 20 festgestellt, da das Soll-Drehmoment und das Ist-Drehmoment nicht signifikant voneinander abweichen.

Um die funktionalen Bauteile des Abtriebs eines Schraubers 20 nach erfolgter Prüfung in einem Betriebspunkt in eine definierte andere Position der funktionalen Bauteile zueinander zu bringen, ist die Steuereinheit 22 dazu ausgelegt, die Dreheinheit 21 des Schraubers 20 über eine Anfangsdrehposition hinaus um einen vorgegebenen Winkelbetrag in eine andere Anfangsdrehposition zurückzudrehen. Wenn z. B. die Dreheinheit 21 aus einer Anfangsdrehposition (0°) zunächst um 10° im Uhrzeigersinn gedreht wird, bis die Gegendrehmoment-Erzeugungseinrichtung 3 ein dem von der Dreheinheit 21 verursachten Ist-Drehmoment entgegengesetztes Drehmoment erzeugt hat, wird die Dreheinheit 21 wieder um 10° entgegengesetzt dem Uhrzeigersinn in ihre erste Anfangsdrehposition (0°) zurückgedreht. Dann wird die Dreheinheit 21 über diese erste Anfangsdrehposition (0°) hinaus um einen vorgegebenen Winkelbetrag (z. B. 5°) entgegengesetzt dem Uhrzeigersinn in eine andere zweite Anfangsdrehposition (-5°) zurückgedreht. Damit wird erreicht, dass ein darauf folgender Prüfvorgang bei einer definierten anderen Position der im Abtrieb befindlichen funktionalen Bauteile zueinander stattfindet. Die Begriffe 'im Uhrzeigersinn' und 'entgegen Uhrzeigersinn' im vorgenannten Beispiel sind exemplarisch zu verstehen. Allgemeiner kann von einer Drehung in Anziehrichtung (im obigen Beispiel 'im Uhrzeigersinn') und einem Zurückdrehen entgegen Anziehrichtung (im obigen Beispiel 'entgegen Uhrzeigersinn') gesprochen werden. Die Anziehrichtung kann aber auch entgegen Uhrzeigersinn sein und die Richtung entgegen Anziehrichtung kann auch im Uhrzeigersinn sein.

Indem nun die Steuereinheit 22 bzw. die Steuerung für den Prüfablauf so ausgelegt wird, dass die Steuerung einer Drehung der mit der Prüfeinheit in Kontakt gebrachten Dreheinheit 21, bis der erste Drehmomentsensor 23 ein vorgegebenes Soll-Drehmoment erreicht, und das nachfolgende Zurückdrehen der Dreheinheit 21 über die Anfangsdrehposition hinaus um den vorgegebenen Winkelbetrag in eine andere Anfangsdrehposition wiederholt durchgeführt wird, kann erreicht werden, dass der gesamte Abtrieb 27 sukzessive und systematisch in Schritten des vorgegebenen Winkelbetrags auf Maschinenfähigkeit untersucht wird.

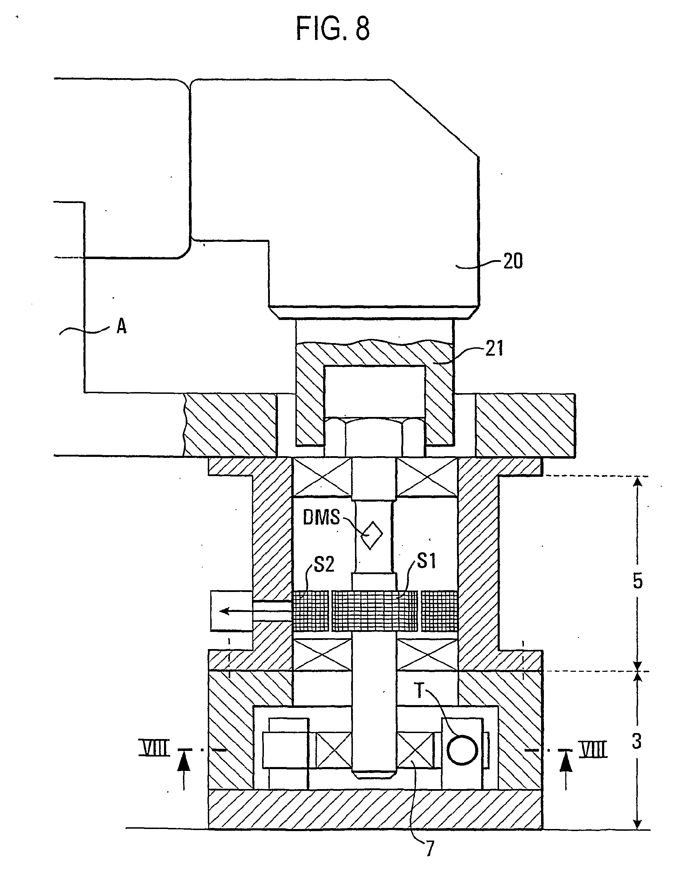

Fig. 8 zeigt eine Querschnittsansicht einer Prüfeinheit 2, die mit der Dreheinheit 21 eines Schraubers 20 in Kontakt gebracht ist, gemäß einer Ausführungsform der vorliegenden Erfindung. Der Schrauber 20 ist dabei in einer Ablage A fixiert. Die Gegendrehmoment-Erzeugungseinrichtung 3 ist mit dem zweiten Drehmomentsensor 5 über eine Drehachse verbunden, deren eines Ende so geformt ist, um mit der Dreheinheit 21 in Eingriff zu gelangen, so dass durch das Drehen der Dreheinheit 21 ein Drehmoment auf die Drehachse der Prüfeinheit 2 übertragen werden kann. Die Prüfeinheit 2 ist dabei entweder fest mit der Ablage A verbunden oder auf einer anderweitigen unbeweglichen Unterlage fixiert.

Auf der Drehachse der Prüfeinheit 2 ist ein Dehnmessstreifen DMS angebracht, der eine Torsion an einer verjüngten Stelle der Drehachse der Prüfeinheit 2 detektierten kann, wenn die Drehachse mit dem von der Dreheinheit 21 verursachten Drehmoment beaufschlagt wird. Mittels Spulen S1 und S2 ist eine kontaktlose Ausgabe des vom Dehnmessstreifen DMS gemessenen Ist-Drehmoments an die Vergleichseinheit 6 (nicht in Fig. 8 gezeigt) möglich. Im unteren Teil der Fig. 8 ist in Seitenansicht der Querschnitt der Gegendrehmoment-Erzeugungseinrichtung 3 gezeigt, welche Tellerfedern T und einen Freilauf 7 umfasst.

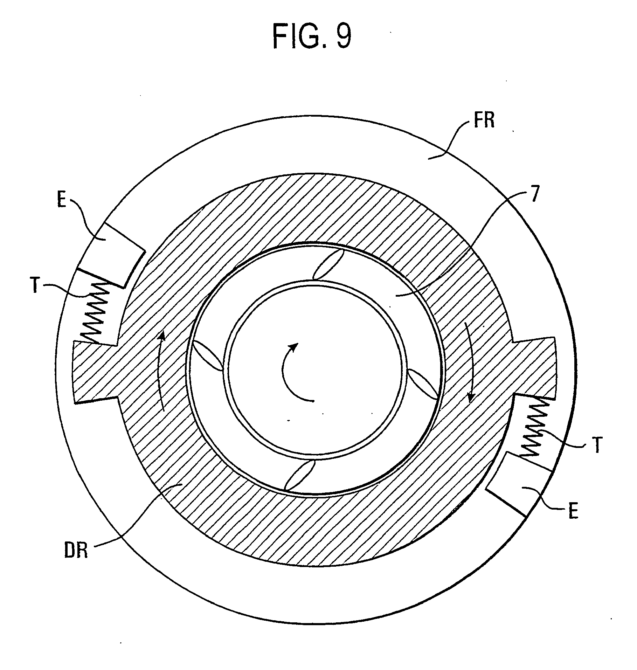

Eine Beschreibung dieser Gegendrehmoment-Erzeugungseinrichtung 3 erfolgt nun anhand Fig. 9, die eine Draufsicht auf die Schnittebene entlang der Linie VIII-VIII in Fig. 8 darstellt. In der Mitte der Fig. 9 ist die Drehachse der Prüfeinheit 2 abgebildet, die sich in Anziehrichtung (hier exemplarisch im Uhrzeigersinn) beim Drehen der Dreheinheit 21 des Schraubers 20 dreht. Ein Freilauf 7 ist dergestalt zwischen Drehachse der Prüfeinheit 2 und einem drehenden Ring DR angebracht, dass die Drehachse bei einer Drehung im Uhrzeigersinn den drehenden Ring DR mitnimmt (Sperren des Freilaufs in Anziehrichtung, hier im Uhrzeigersinn). Der drehende Ring DR, der zwei nach außen gerichtete Nasen aufweist, dreht sich in bezug auf einen feststehenden Ring FR, der seinerseits zwei feststehende Einbuchtungen E aufweist. Zwischen den Nasen des drehenden Rings DR und den Einbuchtungen E des feststehenden Rings FR können Federn angebracht sein, die ein weiches Abfangen des vom Schrauber aufgenommenen Drehmoments bewirken. Diese Federn können in Form von Tellerfedern T vorliegen. Während des Zurückdrehens der Dreheinheit 21 in die erste Anfangsdrehposition drücken die Federn T den drehenden Ring DR in seine Ausgangslage (mit kraftfreien Federn T) zurück. Beim Zurückdrehen der Dreheinheit 21 über die erste Anfangsdrehposition hinaus um einen vorgegebenen Winkelbetrag in eine zweite Anfangsdrehposition wird der Kontakt zwischen Dreheinheit 21 und der Prüfeinheit 2 aufgrund des Freilaufs 7 kraftlos. Mit anderen Worten, nimmt die Drehachse der Prüfeinheit 2 beim Zurückdrehen der Dreheinheit über die erste Anfangsdrehposition der Dreheinheit 21 hinaus in die zweite Anfangsdrehposition den drehenden Ring DR nicht mit, da sich die Drehachse der Prüfeinheit 2 in Freilaufrichtung (hier entgegen Uhrzeigersinn) dreht. Wird nun die Dreheinheit 21 aus der neuen Anfangsdrehposition wieder in Anziehrichtung (hier im Uhrzeigersinn) gedreht, bewirkt der Freilauf 7 durch Sperren wieder eine Mitnahme des drehenden Ringes DR in Drehrichtung (hier im Uhrzeigersinn).

Die Verwendung eines Freilaufs 7 in der Prüfeinheit 2 eines Prüfsystems 1 der vorliegenden Erfindung hat den Vorteil, dass bei einer Wiederholung des Prüfzyklus für einen anderen Betriebspunkt des Schraubers die Dreheinheit 21 nicht von der Prüfeinheit 2 abgenommen und wieder kontaktiert werden muss, so dass ein einmaliges in Kontakt bringen der Dreheinheit 21 mit der Prüfeinheit 2 ausreicht, um einen mehrstufigen Prüfablauf für mehrere Betriebspunkte des Schraubers ohne großen Aufwand vollautomatisch durchführen zu können. Das bedeutet, dass ein Verwender eines handgeführten Schraubers 20 diesen in einer Arbeitspause mit der Prüfeinheit 2 bzw. der Ablage A kontaktieren kann und eine automatische Prüfablaufsteuerung durchgeführt wird, die eine systematische Abprüfung mehrerer verschiedener Betriebspunkte des Schraubers bei verschiedenen Stellungen der funktionalen Bauteile des Abtriebs zueinander ermöglicht.

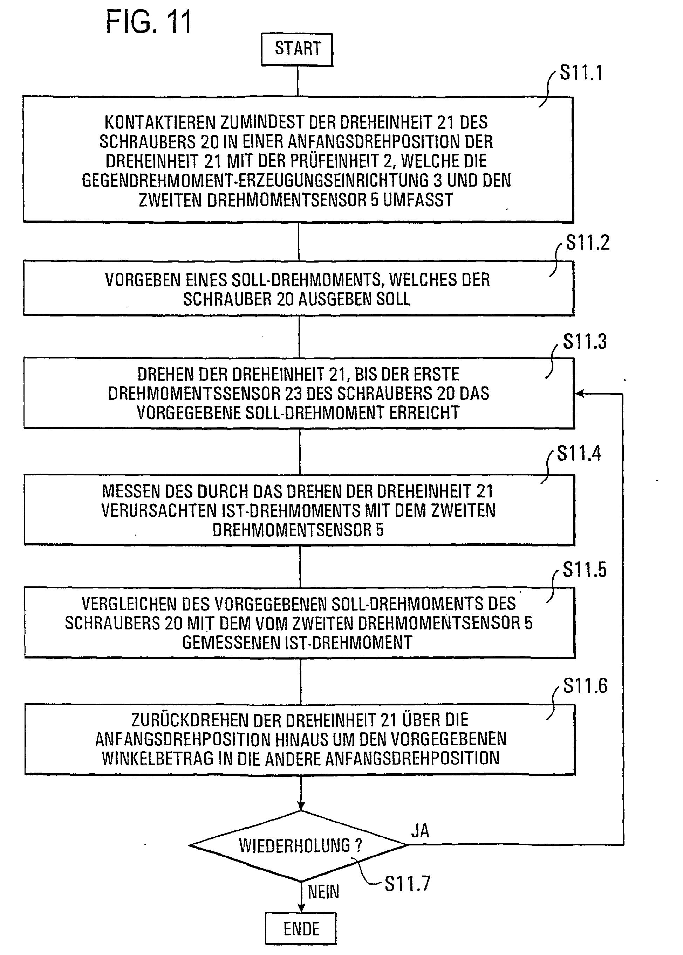

Mit Bezug auf die Figur 11 werden nun Ausführungsformen des erfindungsgemäßen Verfahrens zum Prüfen von Schraubern mit einer Dreheinheit und einem ersten Drehmomentsensor beschrieben.

Fig. 11 zeigt das Flussdiagramm eines Verfahrens gemäß einer ersten Ausführungsform zum Prüfen von Schraubern 20 mit einer Dreheinheit 21 und einem ersten Drehmomentsensor 23, wobei das Verfahren die Schritte S10.1 bis S10.6 aus Fig. 10 umfasst. Diese Schritte sind in Fig. 11 mit S11.1 bis S11.6 bezeichnet, so dass hier auf die Beschreibung zu Fig. 10 verwiesen wird.

An den Schritt f) des Zurückdrehens S11.6 der Dreheinheit 21 über die Anfangsdrehposition hinaus um einen vorgegebenen Winkelbetrag in eine andere Anfangsdrehposition schließt sich gemäß Fig. 11 im Schritt S11.7 eine Entscheidung an, ob die Schritte c) bis f) (S11.3 bis S11.6) wiederholt werden sollen. Wenn eine Wiederholung stattfinden soll (JA nach S11.7), werden die Schritte c) bis f) (S11.3 bis S11.6) in Fig. 11 der Reihe nach noch einmal durchlaufen.

Bei einer Wiederholung des Schrittes c) wird die Dreheinheit vorzugsweise beginnend aus derjenigen Anfangsdrehposition gedreht, in der sich die Dreheinheit nach der unmittelbar vorangehenden Durchführung des Schrittes f) befindet. Die bei einem vorangehenden Zurückdrehen der Dreheinheit über eine Anfangsdrehposition hinaus um einen vorgegebenen Winkelbetrag erreichte andere Anfangsdrehposition wird somit als die eine Anfangsdrehposition bei einem nachfolgenden Drehen der Dreheinheit, bis der erste Drehmomentsensor des Schraubers das vorgegebene Soll-Drehmoment erreicht, verwendet. Dadurch kann erreicht werden, dass eine wiederholte Prüfung des Schraubers an einem definierten Betriebspunkt erfolgt, der sich nicht nur zufällig, sondern mit Sicherheit von dem Betriebspunkt der vorangehenden Überprüfung unterscheidet. Hierdurch wird zum einen eine effektive Überprüfung des Schraubers erreicht, da Doppelüberprüfungen an ein und demselben Betriebspunkt des Schraubers vermieden werden. Zum anderen wird die Überprüfung des Schraubers insgesamt zuverlässiger, da eine größere Anzahl verschiedener Betriebspunkte überprüft wird, als wenn bei einer zufälligen Wahl der Anfangsdrehposition der Dreheinheit für mehrere aufeinander folgende Prüfabläufe unter Umständen manche Betriebspunkte mehrfach überprüft werden.

Als vorteilhaft erweist es sich auch, wenn das Produkt aus der Anzahl der Wiederholungen, bzw. der Durchführungen, der Schritte c) bis f) und dem Wert des vorgegebenen Winkelbetrags mindestens 360° ergibt. Dadurch kann erreicht werden, dass der volle Funktionsbereich des Abtriebs eines Schraubers in Abständen des vorgegebenen Winkelbetrags überprüft wird. Wie oben bereits erläutert, wird dabei zumindest beim ersten Durchprüfen eines Vollwinkelbereichs von 360° kein Betriebspunkt mehr als einmal überprüft, wodurch der gesamte Prüfvorgang sehr effektiv ist. Ferner wird der Schrauber bei jedem Durchlauf der Schritte c) bis f) in jeweils voneinander verschiedenen Positionen der im Schrauber befindlichen funktionalen Bauteile, wie z. B. Zahnräder des Abtriebs, überprüft. Somit wird der gesamte Prüfungsablauf nicht nur besonders effektiv gestaltet, sondern liefert auch ein zuverlässiges Prüfergebnis, da der Abtrieb in vielen voneinander verschiedenen Betriebspositionen überprüft wird.

Außerdem ist es vorteilhaft, den Wert des vorgegebenen Winkelbetrags, um den die Dreheinheit über die Anfangsdrehposition hinaus in eine andere Anfangsdrehposition zurückgedreht wird, kleiner oder gleich dem Quotienten aus 360° und der Anzahl der Zähne eines Zahnrades in einem Schrauber zu wählen, welches von allen Zahnrädern in dem Schrauber die meisten Zähne aufweist. Dadurch kann erreicht werden, dass bei Wiederholung der Schritte c) bis f) so oft, dass das Produkt aus der Anzahl der Wiederholungen und dem Wert des vorgegebenen Winkelbetrags mindestens 360° ergibt, der gesamte Abtrieb des Schraubers vollständig überprüft wird. Damit kann sichergestellt werden, dass ein Fehler im Abtrieb des Schraubers, der z.B. auf der Schadhaftigkeit eines einzelnen Zahnes eines der Zahnräder im Abtrieb des Schraubers beruht, zuverlässig erkannt wird. Selbst bei dieser zuvor beschriebenen Ausführungsform eines Prüfungsablaufs eines Schraubers ist der gesamte Prüfungsvorgang äußerst effektiv, da kein Betriebspunkt des Schraubers mehr als einmal überprüft wird.

Ferner ist vorteilhaft, dass der Schrauber als fähig beurteilt wird, wenn bei jedem Vergleich des Soll-Drehmoments des Schraubers mit dem Ist-Drehmoment der Prüfeinheit das Soll-Drehmoment und das Ist-Drehmoment höchstens um den vorgegebenen Betrag voneinander abweichen. Dadurch kann erreicht werden, dass ein Schrauber, der zumindest in einem Betriebspunkt eine Fehlfunktion aufweist, zuverlässig als NIO (nicht in Ordnung/nicht fähig) beurteilt wird, und aus dem Produktionsprozess entfernt wird.

### GEWERBLICH ANWENDBARKEIT

Wie voranstehend erläutert, wird bei dem erfindungsgemäßen Prüfsystem ermöglicht, Schrauber effektiv und kostengünstig auf ihre Fähigkeit zu überprüfen. Obwohl voranstehend vereinzelt Bezugnahmen auf die Automobilfertigung durchgeführt wurden, ist die vorliegende Erfindung nicht darauf beschränkt, sondern kann in einer Vielzahl von anderen Anwendungsfällen verwendet werden, in denen Schrauber zum Einsatz kommen, beispielsweise in der Serienfertigung von HiFi-Produkten, Halbleiter-Bestückungsvorrichtungen etc.

Deshalb sind zahlreiche weitere Ausführungsformen und Verbesserungen der Erfindung möglich, ohne von dem Schutzumfang abzuweichen, wie er in den beigefügten Patentansprüchen definiert ist. Zahlreiche Variationen und Veränderungen können deshalb von einem Durchschnittsfachmann auf Grundlage der obigen Lehren durchgeführt werden.

Bezugszeichen in den Ansprüchen dienen lediglich Illustrationszwecken und engen den Schutzumfang der Ansprüche nicht ein.

## Patentansprüche

1. System zur automatischen Prüfung von Schraubern (20), umfassend:
**a)** mindestens einen Schrauber (20) mit einer Dreheinheit (21) ;
**b1)** eine Steuereinheit (22) zum Steuern einer Drehung der Dreheinheit (21);
**c1)** eine Prüfeinheit (2) zum Prüfen des Schraubers (20) über die Dreheinheit (21); und
**d)** eine Datenaustauscheinheit (22a) zum zumindest unidirektionalen Austausch von Daten von der Prüfeinheit (2) zur Steuereinheit (22),
***dadurch gekennzeichnet, dass***
**c2)** die Prüfeinheit (2) geeignet ist, zumindest mit der Dreheinheit (21) zumindest eines Schraubers (20) in einer Anfangsdrehposition der Dreheinheit (21) in Kontakt gebracht zu werden; und
**b2)** die Steuereinheit (22) ausgelegt ist, die Dreheinheit (21) über die Anfangsdrehposition hinaus um einen vorgegebenen Winkelbetrag in eine andere Anfangsdrehposition zurückzudrehen.

2. System nach Anspruch 1, wobei die Daten Drehmomentwerte des Schraubers (20) enthalten.

3. System nach Anspruch 1 oder 2, wobei die Prüfeinheit (2) ausgelegt ist, ein von der Dreheinheit (21) des Schraubers (20) ausgegebenes Drehmoment zu überprüfen.

4. System nach Anspruch 3, wobei die Prüfeinheit (2) ausgelegt ist, ein Ergebnis der Überprüfung des von der Dreheinheit (21) des Schraubers (20) ausgegebenen Drehmoments als Wert eines Ist-Drehmoments des Schraubers (20) über die Datenaustauscheinheit (22a) zur Steuereinheit (22) auszutauschen.

5. System nach einem der vorangehenden Ansprüche, wobei der Schrauber (20) ferner einen ersten Drehmomentsensor (23) umfasst.

6. System nach einem der vorangehenden Ansprüche, wobei die Prüfeinheit (2) eine Gegendrehmoment-Erzeugungseinrichtung (3) und einen zweiten Drehmomentsensor (5) umfasst.

7. System nach Anspruch **5** oder Anspruch **6** in Abhängigkeit von Anspruch **5,** wobei die Steuereinheit (22) geeignet ist, eine Drehung der mit der Prüfeinheit (2) in Kontakt gebrachten Dreheinheit (21) zu steuern, bis der erste Drehmomentsensor (23) ein vorgegebenes Soll-Drehmoment erreicht.

8. System nach Anspruch **6** oder Anspruch **7** in Abhängigkeit von Anspruch **6,** wobei der zweite Drehmomentsensor (5) geeignet ist, das durch das Drehen der Dreheinheit (21) verursachte Ist-Drehmoment zu messen.

9. System nach Anspruch **6** oder einem der Ansprüche **7** oder **8** in Abhängigkeit von Anspruch **6,** ferner umfassend eine Vergleichseinheit (6) zum Vergleichen des vorgegebenen Soll-Drehmoments des Schraubers (20) mit dem vom zweiten Drehmomentsensor (5) gemessenen Ist-Drehmoment.

10. System nach **Anspruch 1** oder einem der Ansprüche **7** bis **9,** wobei die Steuereinheit (22) ausgelegt ist, für den Fall, dass das Soll-Drehmoment und das Ist-Drehmoment höchstens um einen vorgegebenen Betrag voneinander abweichen, die Dreheinheit (21) über die Anfangsdrehposition hinaus um den vorgegebenen Winkelbetrag in die andere Anfangsdrehposition zurückzudrehen.

11. System nach **Anspruch 5** oder einem der Ansprüche **6** bis **10** in Abhängigkeit von Anspruch **5,** wobei die Steuereinheit (22) ausgelegt ist, die Steuerung einer Drehung der mit der Prüfeinheit in Kontakt gebrachten Dreheinheit (21), bis der erste Drehmomentsensor (23) ein vorgegebenes Soll-Drehmoment erreicht, und das nachfolgende Zurückdrehen der Dreheinheit (21) über die Anfangsdrehposition hinaus um den vorgegebenen Winkelbetrag in eine andere Anfangsdrehposition wiederholt durchzuführen.

12. System nach einem der Ansprüche **1** bis **11,** wobei die Prüfeinheit (2) einen Freilauf (7) umfasst, der gewährleistet, dass der Kontakt zwischen der Dreheinheit (21) und der Prüfeinheit (2) während des Zurückdrehens der Dreheinheit (21) kraftlos wird.

13. System nach Anspruch **12** in Abhängigkeit von Anspruch **6,** wobei der Freilauf (7) bewirkt, dass während des Zurückdrehens der Dreheinheit (21) die Gegendrehmoment-Erzeugungseinrichtung (3) entspannt wird und der zweite Drehmomentsensor (5) zurückgesetzt wird.

14. System nach Anspruch **6** oder einem der Ansprüche **7** bis **13** in Abhängigkeit von Anspruch **6,** wobei die Gegendrehmoment-Erzeugungseinrichtung (3) ein Paar von Tellerfedern beinhaltet.

15. System nach Anspruch **6** oder einem der Ansprüche **7** bis **14** in Abhängigkeit von Anspruch **6,** wobei der zweite Drehmomentsensor (5) geeicht ist.

16. System nach **Anspruch 6** oder einem der Ansprüche **7** bis **15** in Abhängigkeit von Anspruch **6,** wobei der zweite Drehmomentsensor (5) eine geeichte Drehkette beinhaltet.

17. System nach **Anspruch 6** oder einem der Ansprüche **7** bis **16** in Abhängigkeit von Anspruch **6,** wobei der zweite Drehmomentsensor (5) einen geeichten Dehnmessstreifen beinhaltet.

18. System nach einem der vorangehenden Ansprüche, wobei die Datenaustauscheinheit (22a) eine elektrische Leitung umfasst, die die Prüfeinheit (2) und die Steuereinheit (22) miteinander verbindet.

19. System nach **Anspruch 1,** wobei die Datenaustauscheinheit (22a) eine drahtlose Kommunikationsverbindung zwischen der Prüfeinheit (2) und der Steuereinheit (22) umfasst.

20. System nach Anspruch **19,** wobei die drahtlose Kommunikationsverbindung eine Infrarot-Schnittstelle ist.

21. System nach Anspruch **19,** wobei die drahtlose Kommunikationsverbindung eine Funkschnittstelle ist.

22. System nach einem der vorangehenden Ansprüche, ferner umfassend eine Aufnahmeeinheit zur Aufnahme des Schraubers (20).

23. System nach Anspruch **22,** wobei die Aufnahmeeinheit ausgelegt ist, den Schrauber (20) so aufzunehmen, dass die Dreheinheit (21) des Schraubers (20) in der Anfangsdrehposition mit der Gegendrehmoment-Erzeugungseinrichtung (3) in Kontakt ist.

24. System nach einem der Ansprüche **22** oder **23,** wobei die Aufnahmeeinheit als Ablageschale für den Schrauber (20) ausgebildet ist und die Prüfeinheit (2) in die Ablageschale integriert ist.

25. System nach Anspruch **24,** wobei die Ablageschale fest mit der Steuereinheit (22) verbunden ist.

26. System nach einem der Ansprüche **24** oder **25,** wobei die Ablageschale einen Spannbügel zum Fixieren des Schraubers (20) in der Ablageschale aufweist.

27. System nach einem der vorangehenden Ansprüche, wobei die Prüfeinheit (2) in die Steuereinheit (22) integriert ist.

28. System nach einem der vorangehenden Ansprüche, wobei der Schrauber (20) ein handgeführter Schrauber ist.

## Claims

1. System for the automatic testing of screwdrivers or wrenches (20), comprising:
a) at least one screwdriver or wrench (20) having a rotating unit (21);
b1) a control unit (22) for controlling rotation of the rotating unit (21);
c1) a testing unit (2) for testing the screwdriver or wrench (20) via the rotating unit (21); and
d) a data exchange unit (22a) for at least unidirectional exchange of data from the testing unit (2) to the control unit (22),
**characterised in that**
c2) the testing unit (2) is adapted to be brought into contact at least with the rotating unit (21) of at least one screwdriver or wrench (20) in an initial rotational position of the rotating unit (21); and
b) the control unit (22) is designed to rotate the rotating unit (21) beyond the initial rotational position by a predetermined angular amount back into another initial rotational position.

2. System according to claim 1, wherein the data include torque values of the screwdriver or wrench (20).

3. System according to claim 1 or 2, wherein the testing unit (2) is designed to check a torque outputted by the rotating unit (21)ofthe screwdriver or wrench (20).

4. System according to claim 3, wherein the testing unit (2) is designed to exchange a result of checking the torque outputted by the rotating unit (21) of the screwdriver or wrench (20) as a value of an actual torque of the screwdriver or wrench (20) via the data exchange unit (22a) to the control unit (22).

5. System according to any of the preceding claims, wherein the screwdriver or wrench (20) further comprises a first torque sensor (23).

6. System according to any of the preceding claims, wherein the testing unit (2) comprises a countertorque-generating device (3) and a second torque sensor (5).

7. System according to claim 5 or claim 6 as a function of claim 5, wherein the control unit (22) is adapted to control rotation of the rotating unit (21) which is brought into contact with the testing unit (2), until the first torque sensor (23) reaches a predetermined nominal torque.

8. System according to claim 6 or claim 7 as a function of claim 6, wherein the second torque sensor (5) is adapted to measure the actual torque caused by rotation of the rotating unit (21).

9. System according to claim 6 or either of claims 7 or 8 as a function of claim 6, further comprising a comparison unit (6) for comparing the predetermined nominal torque of the screwdriver or wrench (20) with the actual torque measured by the second torque sensor (5).

10. System according to claim 1 or any of claims 7 to 9, wherein the control unit (22) is designed, in the event that the nominal torque and the actual torque differ from each other by a predetermined amount at the maximum, to rotate the rotating unit (21) beyond the initial rotational position by the predetermined angular amount back into the other initial rotational position.

11. System according to claim 5 or any of claims 6 to 10 as a function of claim 5, wherein the control unit (22) is designed to perform control of rotation of the rotating unit (21) which is brought into contact with the testing unit, until the first torque sensor (23) reaches a predetermined nominal torque, and subsequent rotation of the rotating unit (21) beyond the initial rotational position by the predetermined angular amount back into another rotational position repeatedly.

12. System according to any of claims 1 to 11, wherein the testing unit (2) comprises a freewheel (7) which ensures that contact between the rotating unit (21) and the testing unit (2) becomes adynamic during reverse rotation of the rotating unit (21).

13. System according to claim 12 as a function of claim 6, wherein the freewheel (7) causes the countertorque generating device (3) to be released and the second torque sensor (5) to be set back during reverse rotation of the rotating unit (21).

14. System according to claim 6 or any of claims 7 to 13 as a function of claim 6, wherein the countertorque generating device (3) includes a pair of cup springs.

15. System according to claim 6 or any of claims 7 to 14 as a function of claim 6, wherein the second torque sensor (5) is calibrated.

16. System according to claim 6 or any of claims 7 to 15 as a function of claim 6, wherein the second torque sensor (5) includes a calibrated rotating chain.

17. System according to claim 6 or any of claims 7 to 16 as a function of claim 6, wherein the second torque sensor (5) includes a calibrated strain gauge.

18. System according to any of the preceding claims, wherein the data exchange unit (22a) comprises an electrical wire which connects the testing unit (2) and the control unit (22) to each other.

19. System according to claim 1, wherein the data exchange unit (22a) comprises a wireless communications connection between the testing unit (2) and the control unit (22).

20. System according to claim 19, wherein the wireless communications connection is an infrared interface.

21. System according to claim 19, wherein the wireless communications connection is a radio interface.

22. System according to any of the preceding claims, further comprising a holding unit for holding the screwdriver or wrench (20).

23. System according to claim 22, wherein the holding unit is designed to hold the screwdriver or wrench (20) in such a way that the rotating unit (21) of the screwdriver or wrench (20) is in contact with the countertorque generating device (3) in the initial rotational position.

24. System according to either of claims 22 or 23, wherein the holding unit is designed as a storage tray for the screwdriver or wrench (20) and the testing unit (2) is integrated in the storage tray.

25. System according to claim 24, wherein the storage tray is rigidly connected to the control unit (22).

26. System according to either of claims 24 or 25, wherein the storage tray has a bracket for fixing the screwdriver or wrench (20) in the storage tray.

27. System according to any of the preceding claims, wherein the testing unit (2) is integrated in the control unit (22).

28. System according to any of the preceding claims, wherein the screwdriver or wrench (20) is a hand-held screwdriver or wrench.

## Revendications

1. Système pour tester automatiquement des visseuses (20), comprenant :
a) au moins une visseuse (20) avec une unité rotative (21) ;
b1) une unité de commande (22), pour commander une rotation de l'unité rotative (21) ;
c1) une unité de test (2), pour tester la visseuse (20) par l'intermédiaire de l'unité rotative (21) ; et
d) une unité d'échange de données (22a) pour effectuer un échange au moins unidirectionnel de données, de l'unité de test (2) à l'unité rotative (22),
**caractérisé en ce que**
c2) l'unité de test (2) convient, au moins avec l'unité rotative (21) au moins d'une visseuse (20), pour être mise en contact en une position en rotation initiale de l'unité rotative (21) ; et
b2) l'unité de commande (22) est conçue pour ramener par rotation l'unité rotative (21) en une autre position en rotation initiale, en manoeuvrant d'une valeur angulaire prédéterminée, par la position en rotation initiale.

2. Système selon la revendication 1, dans lequel les données contiennent des valeurs de couple de rotation de la visseuse (20).

3. Système selon la revendication 1 ou 2, dans lequel l'unité de test (2) est conçue pour vérifier un couple de rotation produit par l'unité rotative (21) de la visseuse (20).

4. Système selon la revendication 3, dans lequel l'unité de test (2) est conçue pour échanger un résultat du contrôle du couple de rotation produit par l'unité rotative (21) de la visseuse (20), en tant que valeur d'un couple de rotation réel de la visseuse (20), par l'intermédiaire de l'unité d'échange de données (22a) par rapport à l'unité de commande (22).

5. Système selon l'une des revendications précédentes, dans lequel la visseuse (20) comprend en outre un premier capteur de couple de rotation (23).

6. Système selon l'une des revendications précédentes, dans lequel l'unité de test (2) comprend un dispositif de génération de contre-couple de rotation (3) et un deuxième capteur de couple de rotation (5).

7. Système selon la revendication 5 ou la revendication 6, en fonction de la revendication 5, dans lequel l'unité de commande (22) convient pour commander une rotation de l'unité rotative (21) mise en contact avec l'unité de test (2), jusqu'à ce que le premier capteur de couple de rotation (23) atteigne un couple de rotation de consigne prédéterminé.

8. Système selon la revendication 6 ou la revendication 7, en fonction de la revendication 6, dans lequel le deuxième capteur de couple de rotation (5) convient pour mesurer le couple de rotation réel provoqué par la rotation de l'unité rotative (21).

9. Système selon la revendication 6 ou l'une des revendications 7 ou 8, en fonction de la revendication 6, comprenant en outre une unité e comparaison (6), pour comparer le couple de rotation de consigne prédéterminé de la visseuse (20) au couple de rotation réel mesuré par le deuxième capteur de couple de rotation (5).

10. Système selon la revendication 1 ou l'une des revendications 7 à 9, dans lequel l'unité de commande (22) est conçue, pour le cas dans lequel le couple de rotation de consigne et le couple de rotation réel diffèrent mutuellement au maximum d'une valeur prédéterminée, pour ramener par rotation l'unité rotative (21) en l'autre position en rotation initiale, en manoeuvrant de la valeur angulaire prédéterminée, par la position en rotation initiale.

11. Système selon la revendication 5 ou l'une des revendications 6 à 10, en fonction de la revendication 5, dans lequel l'unité de commande (22) est conçue pour répétitivement effectuer la commande d'une rotation de l'unité rotative (21) mise en contact avec l'unité de test, jusqu'à ce que le premier capteur de couple de rotation (23) atteigne un couple de rotation de consigne prédéterminé, et effectuer le rappel par rotation subséquent de l'unité rotative (21) en une autre position en rotation initiale, en manoeuvrant de la valeur angulaire prédéterminée, par la position en rotation initiale.

12. Système selon l'une des revendications 1 à 11, dans lequel l'unité de test (2) comprend une roue libre (7), assurant que le contact entre l'unité rotative (21) et l'unité de test (2) soit sans effort pendant le rappel par rotation de l'unité rotative (21).

13. Système selon la revendication 12, en fonction de la revendication 6, dans lequel la roue libre (7) fait que, pendant le rappel par rotation de l'unité rotative (21), le dispositif de génération de contre-couple de rotation (3) est relaxé et le deuxième capteur de couple de rotation (5) est ramené à l'état initial.

14. Système selon la revendication 6 ou l'une des revendications 7 à 13, en fonction de la revendication 6, dans lequel le dispositif de génération de contre-couple de rotation (3) contient une paire de ressorts à disques.

15. Système selon la revendication 6 ou l'une des revendications 7 à 14, en fonction de la revendication 6, dans lequel le deuxième capteur de couple de rotation (5) est étalonné.

16. Système selon la revendication 6 ou l'une des revendications 7 à 15, en fonction de la revendication 6, dans lequel le deuxième capteur de couple de rotation (5) contient une chaîne rotative étalonnée.

17. Système selon la revendication 6 ou l'une des revendications 7 à 16, en fonction de la revendication 6, dans lequel le deuxième capteur de couple de rotation (5) contient une jauge dynamométrique étalonnée.

18. Système selon l'une des revendications précédentes, dans lequel l'unité d'échange de données (22a) comprend une ligne électrique reliant ensemble l'unité de test (2) et l'unité de commande (22).

19. Système selon la revendication 1, dans lequel l'unité d'échange de données (22a) comprend une liaison de communication sans fil entre l'unité de test (2) et l'unité de commande (22).

20. Système selon la revendication 19, dans lequel la liaison de communication sans fil est une interface à infra-rouge.

21. Système selon la revendication 19, dans lequel la liaison de communication sans fil est une interface radio.

22. Système selon l'une des revendications précédentes, comprenant en outre une unité de logement, pour recevoir la visseuse (20).

23. Système selon la revendication 22, dans lequel l'unité de logement est conçue pour recevoir la visseuse (20), de manière que l'unité rotative (21) de la visseuse (20) soit en contact avec le dispositif de génération de contre-couple de rotation (3), à la position en rotation initiale.

24. Système selon l'une des revendications 22 ou 23, dans lequel l'unité de logement est réalisée sous forme de coquille de rangement pour la visseuse (20) et l'unité de test (2) est intégrée dans la coquille de rangement.

25. Système selon la revendication 24, dans lequel la coquille de rangement est reliée rigidement à l'unité de commande (22).

26. Système selon l'une des revendications 24 ou 25, dans lequel la coquille de rangement présente un arceau de serrage, pour la fixation de la visseuse (20) dans la coquille de rangement.

27. Système selon l'une des revendications précédentes, dans lequel l'unité de test (2) est intégrée dans l'unité de commande (22).

28. Système selon l'une des revendications précédentes, dans lequel la visseuse (20) est une visseuse guidée manuellement.
